# EUROPEAN PATENT APPLICATION

(11) **EP 4 700 300 A1**
(43) Date of publication of application: **25.02.2026**
(21) Application number: 25196035.7
(22) Date of filing: 14.08.2025
(51) Int. Cl.: F24F 6/12, F24F 6/02, F24F 6/00

(54) **HUMIDIFIER**

(30) Priority: 19.08.2024 KR 20240110478
(71) Applicant: LG Electronics Inc., Yeongdeungpo-gu Seoul 07336 (KR)
(72) Inventor: PARK, Keunman, Seoul (KR); KU, Myungjin, Seoul (KR); LEE, Sangheon, Seoul (KR); CHO, Kyunglok, Seoul (KR); JEONG, Wonjun, Seoul (KR)
(74) Representative: Vossius & Partner Patentanwälte Rechtsanwälte mbB

(57) **Abstract**

A humidifier according to an embodiment of the present disclosure includes: a water tank forming a space in which water is held; a first humidification reservoir connected to the water tank through a supply tube, in which a heater is placed; a first valve opening and closing the supply tube; a second humidification reservoir connected to the first humidification reservoir through a first connection pipe, in which a vibrator is placed; and a middle tray placed below the water tank, and a weight sensor is placed in the middle tray, and when a weight value based on data sensed by the weight sensor is equal to or smaller than a first reference value in an operation stop state, the first valve is opened.

## Description

### 1. Field of the invention

The present disclosure relates to a humidifier, and more particularly, to a humidifier that supplies humidified clean air.

### 2. Description of the Related Art

A humidifier is a device that supplies air containing moisture to a room. The humidifier includes a water tank 100 for holding water, and is classified into an ultrasonic type, a heating type, a natural vaporization type, or a composite type according to a humidification scheme.

The humidifier is a device that vaporizes water to discharge humidified air with a high moisture content. The humidifier vaporizes water by natural vaporization, heat vaporization, and ultrasonic vibration to generate humidified air.

Each vaporization scheme has advantages and disadvantages.

In the case of the natural vaporization, there is a problem in that a user frequently has to manage a humidification medium to be used.

The ultrasonic type humidifier has a vibrator that generates vibration using ultrasonic waves, and sprays water that has been changed into a particulate form by the vibration of the vibrator, which has an advantage of a large spray amount. In the case of the vaporization by ultrasonic vibration, there is a problem in that humidified air may not move actively into an indoor space by atomizing supplied water by the ultrasonic vibration, a problem in that unpleasant humidified air may move into the indoor space when unsterilized water is humidified, and a problem in that the ultrasonic vibrator is vulnerable to high-temperature heat.

In the case of the heat vaporization, a problem of a safety accident may occur when hot humidified air is directly discharged.

Korean Patent Registration No. KR 10-0158806 as a prior document discloses a heater type ultrasonic humidifier that humidifies heated water.

In general, an air purifier and a humidifier are manufactured and used as separate products, but in response to various demands of consumers, a product having both a humidification function and an air purification function in one product is emerging. For example, Korean Patent Unexamined Publication No. 10-2005-0024044 as a prior document discloses a humidification device for air purification as well.

Meanwhile, in a humidifier or a device that provides a humidification function as in the prior documents, if water is accumulated or moisture remains in the humidifier or the device, a cleanliness state can be reduced. In addition, there is a need for hygienic management even in unused storage.

Further, it is necessary to grasp whether water is supplied and a state of a water tank, and control appropriate to an operation mode and a situation is required.

### SUMMARY OF THE INVENTION

The present disclosure has been made in view of the above problems, and it is an object of the present disclosure to solve the above-described problems and other problems.

An object of the present disclosure is to provide a humidifier capable of accurately determining whether a water tank is mounted and performing a corresponding operation.

An object of the present disclosure is to provide a humidifier that operates appropriately depending on whether the water tank is mounted to conveniently supply water or clean the water tank even during operation.

An object of the present disclosure is to provide a humidifier capable of effectively processing data of a weight sensor.

An object of the present disclosure is to provide a humidifier that may remove residual water around a valve and may be stored in a clean state.

An object of the present disclosure is to provide a humidifier capable of accurately determining whether a water tank outer structure is mounted and performing a corresponding operation.

The objects of the present disclosure are not limited to the aforementioned objects, and other objects, which are not mentioned above, will be apparent to a person having ordinary skill in the art from the following description.

In order to achieve the object, a humidifier according to an embodiment of the present disclosure controls a vibrator and a heater based on data sensed by a weight sensor, thereby improving safety and convenience.

In order to achieve the object, a humidifier according to an embodiment of the present disclosure may accurately determine whether a water tank is mounted based on the data sensed by the weight sensor.

In order to achieve the object, a humidifier according to an embodiment of the present disclosure operates a valve based on data sensed by a weight sensor in a stop state to enhance internal hygiene.

A humidifier according to an embodiment of the present disclosure includes: a water tank forming a space in which water is held; a first humidification reservoir connected to the water tank through a supply tube, in which a heater is placed; a first valve opening and closing the supply tube; a second humidification reservoir connected to the first humidification reservoir through a first connection pipe, in which a vibrator is placed; and a middle tray placed below the water tank, and a weight sensor is placed in the middle tray, and when a weight value based on data sensed by the weight sensor is equal to or smaller than a first reference value in an operation stop state, the first valve is opened.

The number of opening times of the first valve is counted, and when water supplying control of the first humidification reservoir is performed, the counter is initialized.

The number of opening times of the first valve is counted, and when a humidification operation is performed, the count is initialized.

The first valve is closed after a preset opening time has elapsed.

The humidifier according to an embodiment of the present disclosure further includes a blower fan placed below the first humidification reservoir and the second humidification reservoir.

The blower fan rotates for the opening time.

The humidifier according to an embodiment of the present disclosure further includes a control unit controlling a humidifier based on the weight value.

The weight sensor acquires weight values at a first cycle.

The control unit calculates a weight value by averaging the data of the weight sensor at a second cycle set longer than the first cycle.

The control unit averages data during a third cycle set longer than the second cycle every second cycle.

The control unit excludes zero among the data during the third cycle from the average calculation.

The control unit processes zero as the weight value when the data includes continuous zeros of a reference number or more.

A plurality of weight sensors are provided, and the humidifier further includes a sensor circuit board connected to the plurality of weight sensors.

A supply tube hole through which the supply tube passes is formed in the middle tray.

The weight sensor includes a first front weight sensor placed on one side of the supply tube, and a first rear weight sensor placed in a rear of the first front weight sensor, and a second front weight sensor placed on the other side of the supply tube hole, and a second rear weight sensor placed in a rear of the second front weight sensor.

The sensor circuit board processes the data acquired through the plurality of weight sensors and transmits the processed data to the control unit.

According to at least one of the embodiments of the present disclosure, it is possible to accurately determine whether the water tank is mounted, and perform an appropriate corresponding operation.

According to at least one of the embodiments of the present disclosure, it is possible to conveniently supply water or clean the water tank even during operation by appropriately operating depending on whether the water tank being mounted.

According to at least one of the embodiments of the present disclosure, the data of the weight sensor can be effectively processed.

According to at least one of the embodiments of the present disclosure, when the humidifier is not used, residual water around the valve can be removed and stored in a clean state.

According to at least one of the embodiments of the present disclosure, it is possible to it is possible to accurately determine whether the water tank outer structure is mounted and perform a corresponding operation.

The effects of the present disclosure are not limited to the aforementioned effect, and other effects, which are not mentioned above, will be apparent to a person having ordinary skill in the art from the description of the claims.

### BRIEF DESCRIPTION OF THE DRAWINGS

FIG. 1 is a perspective view of a humidifier according to an embodiment of the present disclosure.
FIG. 2 is a plan view of FIG. 1.
FIG. 3 is a cross-sectional view taken along line III-III' of FIG. 2.
FIG. 4 is an exploded perspective view of a water tank cover, an inner reservoir, an outer reservoir, an inner shell, and an outer shell according to an embodiment of the present disclosure.
FIG. 5 is a cross-sectional view of the inner reservoir according to an embodiment of the present disclosure.
FIG. 6 is an exploded perspective view of a water tank, the inner shell, and a middle tray according to an embodiment of the present disclosure.
FIG. 7A is a perspective view of the middle tray according to an embodiment of the present disclosure.
FIG. 7B is a plan view of a tray base according to another embodiment of the present disclosure.
FIG. 8 is a cross-sectional perspective view of one side in which a structure including the water tank, the inner shell, and the middle tray is coupled according to an embodiment of the present disclosure.
FIG. 9 is a side view of a structure in which a first humidification reservoir and a second humidification reservoir are coupled according to an embodiment of the present disclosure.
FIG. 10 is a side view in another direction of the structure in which the first humidification reservoir and the second humidification reservoir are coupled according to an embodiment of the present disclosure.
FIG. 11 is a perspective view for describing top surfaces of the first humidification reservoir and the second humidification reservoir according to an embodiment of the present disclosure.
FIG. 12 is a cross-sectional view in one direction of the structure in which the first humidification reservoir and the second humidification reservoir are coupled according to an embodiment of the present disclosure.
FIG. 13 is a cross-sectional view in a direction different from that of FIG. 12.
FIG. 14 is a schematic diagram for describing a specific connection relationship between the first humidification reservoir and the second humidification reservoir, and a placement relationship of internal components according to an embodiment of the present disclosure.
FIG. 15 is a block diagram of a humidifier according to an embodiment of the present disclosure.
FIG. 16 is a flowchart illustrating a method for operating a humidifier according to an embodiment of the present disclosure.
FIG. 17 is a diagram referred to in the description of weight sensor data processing according to an embodiment of the present disclosure.
FIG. 18 is a diagram referred to in the description of water tank sensing according to an embodiment of the present disclosure.
FIG. 19 is a flowchart illustrating a method for operating a humidifier according to an embodiment of the present disclosure.
FIG. 20 is a flowchart illustrating a method for operating a humidifier according to an embodiment of the present disclosure.

### DETAILED DESCRIPTION OF THE PREFERRED EMBODIMENTS

Hereinafter, embodiments disclosed in the present disclosure will be described in detail with reference to the accompanying drawings. Like reference numerals refer to like or similar elements regardless of reference numerals and a duplicated description thereof will be omitted.

Suffixes "module" and "unit" for components used in the following description are given or mixed in consideration of easy preparation of the present disclosure only and do not have their own distinguished meanings or roles.

Terms including an ordinary number, such as first, second, etc., are used for describing various components, but the components are not limited by the terms. The terms are used only to determine one component from another component.

It should be understood that, when it is described that a constituent element is "connected to" or "accesses" another constituent element, the constituent element may be directly connected to or access the other constituent element, or a third constituent element may be present therebetween. In contrast, when it is described that a constituent element is "directly connected to" or "directly accesses" another constituent element, it is understood that no constituent element is present between the constituent element and another constituent element.

A singular form may include a plural form unless otherwise clearly defined in the context.

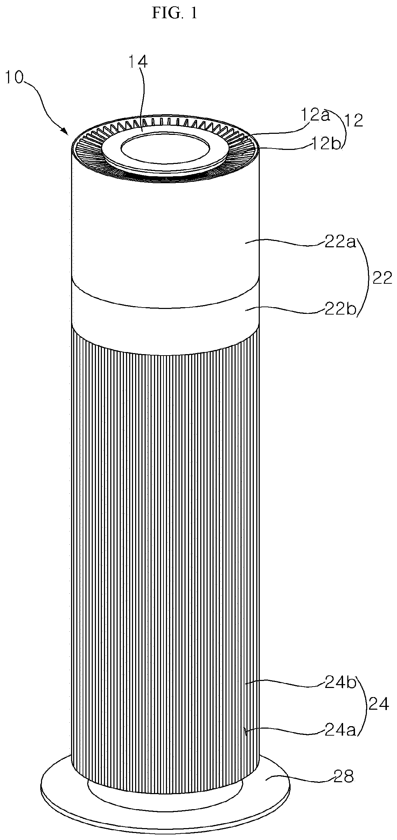

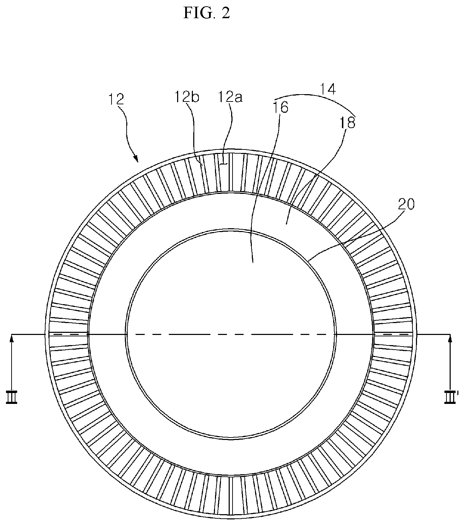

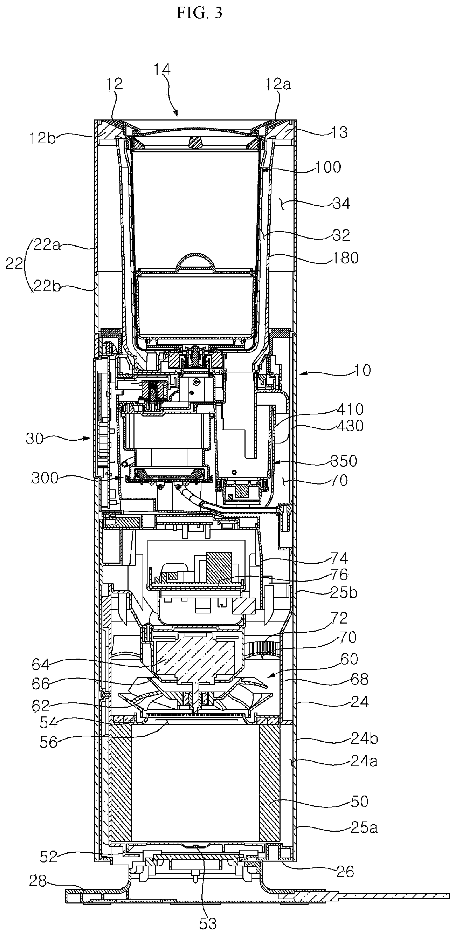

FIG. 1 is a perspective view of a humidifier according to an embodiment of the present disclosure. FIG. 2 is a plan view of FIG. 1 and FIG. 3 is a cross-sectional view taken along line III-III' of FIG. 2.

First, an overall configuration of a humidifier according to the present disclosure will be described with reference to FIGS. 1 to 3.

The humidifier of the present disclosure may humidify water by ultrasonic vibration. The humidifier of the present disclosure may discharge humidified air by heating water. The humidifier of the present disclosure may discharge the humidified air generated by the ultrasonic vibration and the humidified air generated by heating.

Referring to FIGS. 1 to 3, a humidifier includes a casing 10 that forms an exterior, with an inlet 24a and an outlet 12a formed therein, a filter unit that is placed inside the casing 10, and filters air admitted into the inlet 24a, a blower device 60 that is placed inside the casing 10, and moves some of the air inside the casing 10 from the inlet 24a to the outlet 12a, and a humidification module that is placed inside the casing 10, and humidifies some of the air moving to the blower device 60.

The humidification module may include a first humidification reservoir 300 that heats water and a second humidification reservoir 350 that generates humidified air with water. The humidification module may include a humidification module housing 410 that covers peripheries of the first humidification reservoir 300 and the second humidification reservoir 350. A channel housing 430 may be placed on an outer periphery of the humidification module housing 410. A blower channel 70 may be formed between the humidification module housing 410 and the channel housing 430. A configuration and a placement of the humidification module will be described in detail below.

The casing 10 may have a generally cylindrical shape.

The casing 10 may include an intake grille 24 that forms the inlet 24a through which air is admitted, and a discharge grille 12 that forms the outlet 12a through which air is discharged.

The inlet 24a may be formed on a peripheral surface of the casing 10 having the cylindrical shape. The outlet 12a may be formed on a top surface of the casing 10 having the cylindrical shape. In the humidifier of the present disclosure, air may be admitted through the circumferential surface and air may be discharged through the top surface.

Referring to FIG. 3, the intake grille 24 may cover outsides of a filter 50 and a blowing housing 68 to be described below. A plurality of inlets 24a formed in a vertical direction and spaced apart from each other in a circumferential direction may be formed in the intake grilles 24. The inlet 24a may be formed around a location where the filter 50 is placed. The inlet 24a may be formed in a lower portion of the intake grille 24. The lower portion of the intake grille 24 may be formed with inlets 24, and an upper portion of the intake grille 24 may be enclosed to protect the internal construction of the humidifier.

A plurality of grilles 24b which extend in the vertical direction are placed in the intake grilles 24. The plurality of grilles 24b may be placed to be spaced in the circumferential direction of the intake grille 24. A plurality of inlets 24a may be formed between the plurality of grilles 24b.

The intake grille 24 may be divided into an intake grille lower portion 25a in which the inlet 24a is formed and an intake grille upper portion 25b placed above the intake grille lower portion 25a. A display 30 to be described below may be placed in the intake grille upper portion 25b. The intake grille upper portion 25b may cover the blowing housing 68 and an outside of the humidification module to be described below.

The humidifier may include the discharge grille 12 that forms the outlet 12a and a water tank cover 14 which is placed on a top side of the water tank 100. The discharge grille 12 may have a structure that is separated upward from an outer shell 22 described below. The water tank cover 14 may have a structure that is separated from the discharge grille 12 or the water tank 100. The discharge grille 12 may include a plurality of ribs 12b extending radially on an outer periphery of the water tank cover 14. The plurality of ribs 12b placed in the discharge grille 12 may be placed to be spaced in the circumferential direction on the outer periphery of the water tank cover 14.

Referring to FIG. 2, the water tank cover 14 may include a central cover 16 and a peripheral cover 18 placed on the periphery of the central cover 16. The central cover 16 may have a structure that bulges upward toward the center. A water supply hole 20 may be formed between the peripheral cover 18 and the central cover 16 to allow water to move into the water tank 100.

Referring to FIG. 1, the discharge grille 12 may be placed above a first discharge passage 32 and above a second discharge passage 34 to be described below. A plurality of ribs 12b and a plurality of outlets 12a disposed in the discharge grille 12 may be formed.

The discharge grille 12 may have a constant height in the vertical direction. Thus, a mixture passage 13 may be formed between the plurality of ribs 12b placed in the discharge grille 12. In the mixture passage 13, the air moving through the first discharge passage 12 and the air moving through the second discharge passage 34 may be mixed together.

Each of the plurality of ribs 12b is formed in such a way that an outer peripheral end thereof is positioned higher than an inner peripheral end thereof. Thus, the air moving through the first discharge passage 32 and the second discharge passage 34 may be guided radially inwardly.

The casing 10 may include an outer shell 22 that guides air moving therein to the outlet 12a. The outer shell 22 may form the second discharge passage 34 with the inner shell 180 to be described below.

The outer shell 22 includes an upper outer shell 22a placed under the discharge grille 12 and a lower outer shell 22b placed under the upper outer shell 22a. The lower outer shell 22b may be made of a transparent material.

The casing 10 may include a lower wall 26 that covers a bottom side of the intake grille 24.

The humidifier may include a base 28 placed on a bottom side of the casing 10, and causing a bottom wall 26 to be spaced upward from the ground. An upper end portion of the base 28 may be connected to the bottom wall 26. The bottom wall 26 is placed to cover a bottom surface of the humidifier that is spaced upwardly from the ground by the base 28.

Referring to FIG. 2, the display 30 is placed on one side of the casing 10. The display 30 may allow a user to control a power or an operation of the humidifier. A display for showing an operation status of the humidifier to the user may be placed in the display 30.

The filter unit may allow the air admitted through the inlet 24a to be filtered through the filter 50. The filter unit may allow the filtered air to move upward.

Referring to FIG. 3, the filter unit includes a filter 50 for filtering the air admitted through the inlets 24a and a filter mounting portion for fixing the filter 50 in place inside the casing 10.

The filter 50 may have the cylindrical shape. Thus, the filter 50 is able to filter air sucked from longitudinal and lateral directions perpendicular to the vertical direction. The air admitted through the inlet 24a may move to an inside space of the filter 50. The air that passes through the filter 50 may move to the blower device 60 placed above the filter 50.

The filter mounting portion includes a lower plate 52 placed on a lower side of the filter 50, an upper plate 54 placed on a top side of the filter 50, and a supporter (not illustrated) connecting the lower plate 52 and the upper plate 54.

The lower plate 52 is placed on the lower side of the filter 50. The lower plate 52 may move up and down, and detect whether the filter 50 is placed. A fan sterilizer 53 that emits ultraviolet light upward may be placed in the center of the lower plate 52. The fan sterilizer may sterilize a blower fan 62 to be described below or the inside of the filter 50.

An orifice 56 is formed on the upper plate 54. The orifice 56 may be formed in the center of the upper plate 54. The orifice 56 may allow the air admitted to the inside of the filter 50 to move to the blower fan 62. An inner circumferential end of the upper plate 54 may be bent upward so as to guide air moving upward in an internal space to the blower fan 62.

The supporter may connect the lower plate 52 and the upper plate 54. The supporter may be placed to be spaced in the circumferential direction.

The blower 60 includes the blower fan 62 that forms an air movement within the casing 10 and a fan motor 64 that rotates the blower fan 62.

Referring to FIG. 3, the blower fan 62 may have a fan intake opening on one side facing the orifice 56 and a fan discharge opening on an opposite side to the fan intake opening. As the blower fan 62, a diagonal flow fan in which the fan discharge opening on the opposite side of the fan intake opening faces in a centrifugal direction may be used. The blower fan 62 may include a hub connected to the fan motor 64, a shroud placed to be spaced apart from the hub by a certain distance and forming the fan intake opening, and a blade extending radially connect to connect the hub and the shroud.

The blower fan 62 may operate to send air upward from below. The blower fan 62 may suck air toward the orifice 56 and discharge air to the blower housing 68 where a diffuser 72 is placed.

The fan motor 64 may be placed above the blower fan 62.

The blower includes a motor cover 66 that covers the outside of the fan motor 64, and a blower housing 68 placed to be spaced radially outward from the motor cover 66, that guides the air moving by the blower fan 62 to upward.

A blower channel 70 along which the air moving by the blower fan 62 moves upward may be formed between the motor cover 66 and the blower housing 68. The blower channel 70 may extend to a region where a humidification module housing 410 and a channel housing 430 are formed.

The intake grille 24 may be placed on the outside of the blower housing 68.

The blower 60 includes a diffuser 72 placed between the motor cover 66 and the blower housing 68, which reduces rotational components of the air moving upward by the blower fan 62. A plurality of diffusers 72 may be spaced apart from each other in the circumferential direction.

A control box 74 forming a space in which a circuit board 76 is placed may be placed above the motor cover 66. The control box 74 may be spaced apart inwardly from the blower housing 68. Thus, the blower channel 70 may also be formed in the space between the control box 74 and the blower housing 68.

One or more circuit boards 76 may be placed within the control box 74.

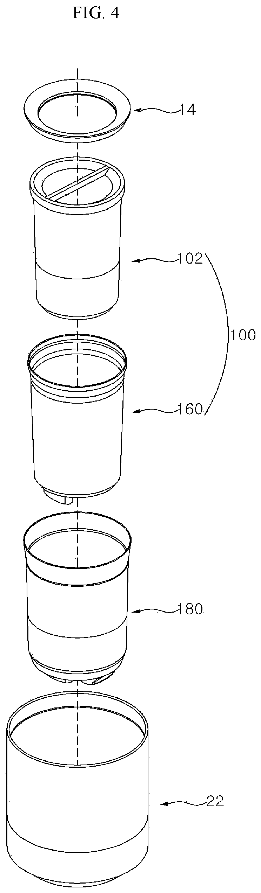

FIG. 4 is an exploded perspective view of a water tank cover, an inner reservoir, an outer reservoir, an inner shell, and an outer shell according to an embodiment of the present disclosure.

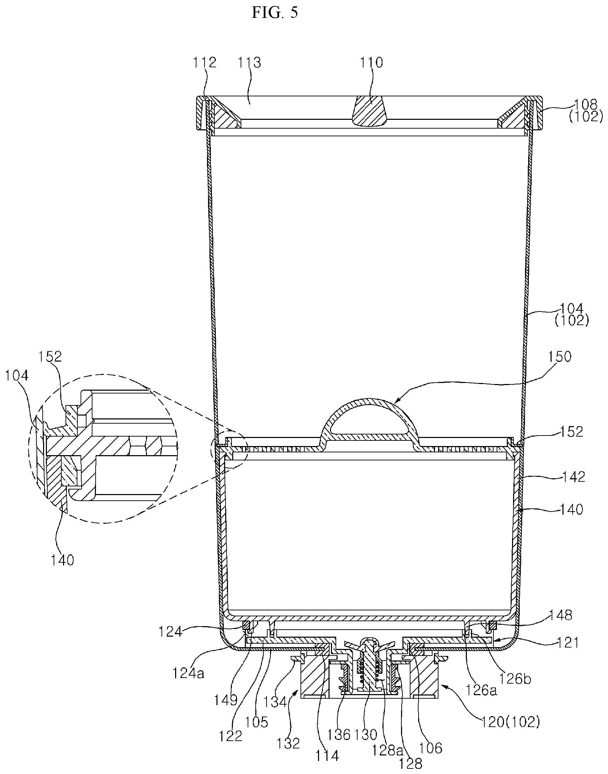

FIG. 5 is a cross-sectional view of the inner reservoir according to an embodiment of the present disclosure.

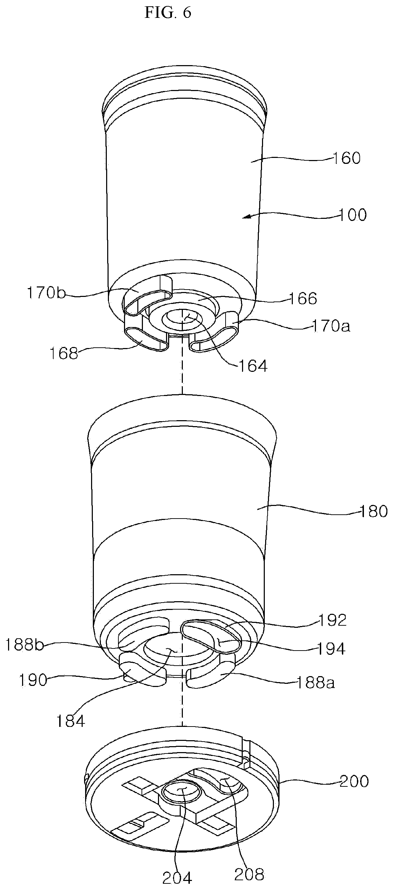

FIG. 6 is an exploded perspective view of a water tank, the inner shell, and a middle tray according to an embodiment of the present disclosure.

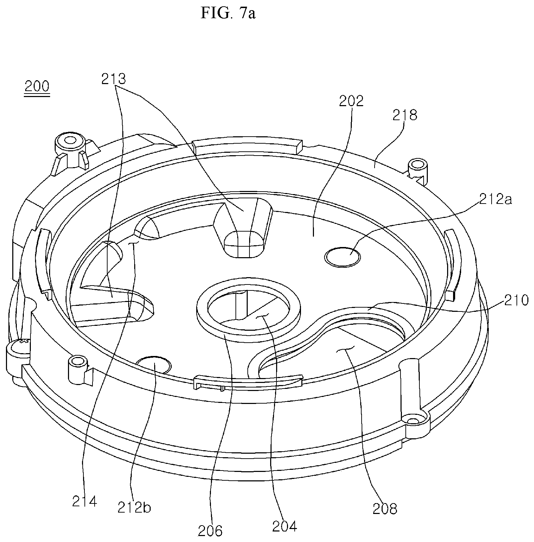

FIG. 7A is a perspective view of the middle tray according to an embodiment of the present disclosure.

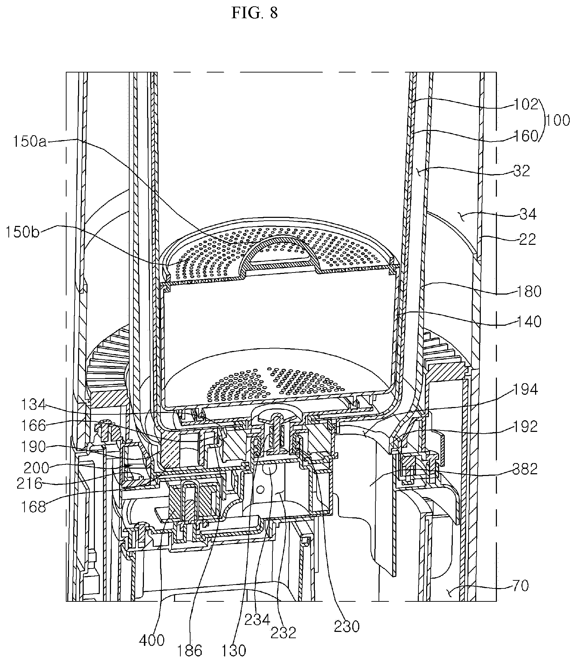

FIG. 8 is a cross-sectional perspective view of one side in which a structure including the water tank, the inner shell, and the middle tray is coupled according to an embodiment of the present disclosure.

Hereinafter, with reference to FIGS. 4 to 8, a construction in which the discharge passage of the present disclosure is formed and a construction of the water tank 100 holding water will be described.

The humidifier includes a water tank 100 that forms a space in which water is held, an inner shell 180 that forms a space in which the water tank 100 is placed, and an outer shell 22 that is spaced apart from an outer periphery of the inner shell 180. The humidifier includes a water softening device 14 placed on the top of the water tank 100.

The water tank 100 includes an inner reservoir 102 in which water is held and an outer reservoir 160 placed to cover the outside of the inner reservoir 102. The inner reservoir 102 may be placed inside the outer reservoir 160. When the inner reservoir 102 is placed inside the outer reservoir 160, an outer peripheral surface of the inner reservoir 102 may be placed in contact with an inner peripheral surface of the outer reservoir 160.

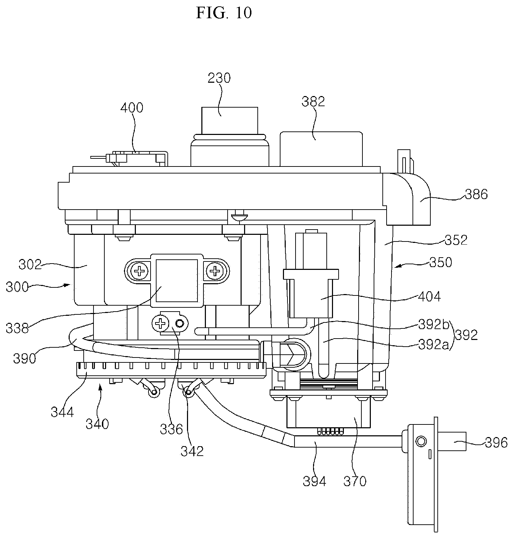

Referring to FIG. 5, the inner reservoir 102 includes an inner reservoir 104 that forms a space in which water is held, a handle 108 that is placed on a top side of the inner reservoir 102, and a connector 120 placed on a bottom side, which connects the inner reservoir 104 to a supply tube 230 (see FIG. 10) to be described below.

Referring to FIG. 5, a water softener 140 that hardens water in the inner reservoir 102 is placed within the inner reservoir 102. The water softer 140 includes a water softener housing 142 forming a space in which an ion exchange resin filter (not illustrated) is placed therein, and a housing cover 150 that covers a top side of the water softener housing 142.

A plurality of cover holes 150b may be formed in the housing cover 150, and a plurality of housing holes (not illustrated) may be formed in the water softener housing 142.

The inner reservoir 104 may be formed in an approximately cylindrical shape. The inner reservoir 104 may have a shape in which a top side is opened. A bottom hole 106 through which held water is discharged may be formed on a bottom surface of the inner reservoir 104. Referring to FIG. 5, the inner reservoir 104 may have a shape in which an internal diameter of a reservoir decreases from the top side to the bottom side.

The bottom hole 106 may be formed at a center of the bottom surface of the inner reservoir 104. The connector 120 may be fixedly placed in the bottom hole 106. The water held in the inner reservoir 102 may move to the supply tube 230 through the connector 120 mounted on the bottom hole 106.

The water softener 140 may be fixedly placed within the inner reservoir 102. The water softener 140 may have an ion exchange resin (not illustrated) that removes ions from water admitted into the inner reservoir 102 therein. The water softener 140 may include a gasket 152 that seals an inner peripheral surface of the inner reservoir 102 and an outer peripheral surface of the water softener 140 on one side of a circumferential surface thereof.

Referring to an enlarged diagram, the gasket 152 placed at an upper end portion of the water softener 140 may be placed in contact with an inner circumferential surface of the inner reservoir 102. Thus, water is prevented from moving to a space between the inner reservoir 102 and the water softener 140 without passing through the inside of the water softener 140. Water admitted from the top side of the inner reservoir 102 and moving to the bottom hole 106 of the inner reservoir 102 may pass through the water softener 140.

The handle 108 includes a ring-shaped handle fixing portion 112 fixedly placed on the upper end portion of the inner reservoir 104 and a handle bar 110 placed to cross the top side of the inner reservoir 104.

The handle fixing portion 112 may have a structure that is hooked to an upper end of the inner reservoir 104. A region of the handle fixing portion 112 placed inside the inner reservoir 104 may include an inclination wall 113 that is inclined downward with respect to the inside of the inner reservoir 104. Accordingly, water dropped through the water tank cover 14 may be admitted into the inner reservoir 102 along an inclination surface of the handle fixing portion 112.

Referring to FIG. 5, the connector 120 includes a connector body 121 placed so as to pass through the bottom hole 106 of the inner reservoir 104, a connector holder 132 coupled to the connector body 121 to fix placement of the connector body 121, and a connector valve 130 placed inside the connector body 121, which opens and closes an internal passage of the connector body 121.

Referring to FIG. 5, the connector body 121 includes a connector plate 122 placed inside the inner reservoir 104, and a connector pipe 128 placed to pass through the bottom hole 106 of the inner reservoir 104 and having an internal passage 128a therein. The connector plate 122 is placed on the top side of the inner reservoir 104.

The connector plate 122 may have a structure that is in contact with a bottom of the water softener 140 to fix the placement of the water softener 140. Fixing ribs 126a and 126b that protrude upward may be placed in the connector plate 122.

Referring to FIG. 5, the fixing ribs 126a and 126b may include a first fixing rib 126a, and a second fixing rib 127b placed radially spaced apart from the first fixing rib 126a. A lower projection 148 of the water softener 140 may be placed in a space between the first fixing rib 126a and the second fixing rib 126b. The first fixing rib 126a and the second fixing rib 126b may prevent the water softener 140 placed inside the inner reservoir 102 from moving in a direction perpendicular to the vertical direction.

A rim wall 124 placed more outward radially outward of the fixing ribs 126a and 126b and protruding upward may be placed on the connector plate 122. Referring to FIG. 5, a hook hole 124a into which a hook 149 of the water softener 140 is inserted may be formed in the rim wall 124.

The connector pipe 128 may have a structure that extends downward from the center of the connector plate 122. The connector pipe 128 is placed to pass through the bottom hole 106 of the inner reservoir 104. The internal passage 128a through which water inside the inner reservoir 102 moves may be formed inside the connector pipe 128. A connector valve 130 that opens and closes the internal passage 128a is placed inside the connector pipe 128.

The connector valve 130 may be placed to move vertically inside the connector pipe 128. When the connector valve 130 is connected to the supply tube 230 described below, the connector valve 130 may move upward to open the internal passage 128a.

The connector holder 132 is fixedly placed on an outer periphery of the connector pipe 128. The connector holder 132 may be placed below the bottom surface of the inner reservoir 104. Thus, the connector holder 132 may be connected to the connector pipe 128 to fix the placement of the connector body 121.

Referring to FIG. 5, the inner reservoir 102 may include a packing 114 mounted to the inner reservoir 104 that forms a periphery of the bottom hole 106. The packing 114 may be made of a rubber material. The packing 114 may be placed to be in contact with the connector plate 122 upward and to be in contact with the connector holder 132 downward.

The packing 114 may prevent a contact between the inner reservoir 104 and the connector body 121. The packing 114 may prevent a contact between the inner reservoir 104 and the connector holder 132. The packing 114 may seal a gap between the connector plate 122, and the bottom wall 105 of the inner reservoir 104. Further, the packing 114 may seal a gap between the connector holder 132, and the bottom wall 105 of the inner reservoir 104. That is, the packing 114 may double prevent water present inside the inner reservoir 102 from leaking through the outside of the connector 120.

An inner sealer 136 may be placed on an outer periphery of the connector pipe 128. The inner sealer 136 may seal a gap between the connector 120 and the supply tube 230.

An outer sealer 134 may be placed on an outer periphery of the connector holder 132. The outer sealer 134 may be placed to be in contact with one side of the outer reservoir 160 and/or the inner shell 180 to be described below.

Referring to FIG. 4, the water tank cover 14 may be placed above the inner reservoir 102. The water tank cover 14 may be placed to be seated on the discharge grille 12. The water tank cover 14 may include a central cover 16, and a peripheral cover 18 placed on an outer periphery of the central cover 16.

The peripheral cover 18 may be placed above the discharge grille 12 to maintain the placement of the water tank cover 14. The peripheral cover 18 may have a ring-shaped structure. The peripheral cover 18 may have a structure that is inclined downward toward a radial inner side. Therefore, when water is supplied to the top, water may be moved to the central cover 16 side.

The central cover 16 may have a shape that bulges upward. Therefore, when water is supplied to the top side of the central cover 16, the water may move in an outer peripheral direction of the central cover 16. A water supply hole 20 for supplying water toward the inner reservoir 102 may be formed between the central cover 16 and the peripheral cover 18. The water supply hole 20 may move above the handle fixing portion 112 of the handle 108 of the inner reservoir 102.

The water tank cover 14 may be placed to be spaced apart upward from the inner reservoir 102 and/or the outer reservoir 160. Therefore, a force of pressing the water tank cover 14 downward by water in the process of supplying water may not be transmitted to the inner reservoir 102 or the outer reservoir 160.

The outer reservoir 160 is placed on an outer periphery of the inner reservoir 102. The outer reservoir 160 may be placed to be in contact with the outer periphery of the inner reservoir 102. Thus, it is possible to minimize condensate water generated in the outer periphery of the inner reservoir 102.

An upper end portion 162 of the outer reservoir 160 may be formed to be spaced apart from the inner reservoir 102. That is, the upper end portion 162 of the outer reservoir 160 may be formed such that a ratio of radially expanding toward the top side increases.

The outer reservoir 160 may also have a cylindrical shape in which a top side is opened. A through-hole 164 through which the connector 120 of the inner reservoir 102 passes may be formed on a bottom surface of the outer reservoir 160. The through-hole 164 is formed to be larger than the bottom hole 106 of the inner reservoir 102.

Referring to FIG. 6, the bottom surface of the outer reservoir 160 may be placed with a lower projection 166 protruding downward from a periphery of the through-hole 164, a pair of first water tank projections 170a and 170b protruding downward from the bottom surface of the outer reservoir 160, and a second water tank projection 168 protruding downward from the bottom surface of the outer reservoir 160.

The lower projection 166 is placed on the periphery of the through-hole 164. The lower projection 166 may extend downward on an inner circumferential end of the bottom surface of the outer reservoir 160. The lower projection 166 may have a ring-shaped structure. The outer sealer 134 may be placed in contact with an inner circumferential surface of the lower projection 166.

Referring to FIG. 6, the pair of first water projections 170a and 170b may be placed in opposite directions to each other with respect to the through-hole 164. The pair of first water tank projections 170a and 170b may transmit loads of the inner reservoir 102 and the outer reservoir 160 to weight sensors 212a and 212b of the middle tray 200 to be described below. The pair of first water tank projections 170a and 170b may transmit the loads of the inner reservoir 102 and the outer reservoir 160 directly to the weight sensors 212a and 212b or transmit the loads indirectly through the inner shell 180.

The second water tank projection 168 may be placed between the pair of first water tank projections 170a and 170b.

The inner shell 180 is placed to be spaced apart from the outer reservoir 160. The inner shell 180 is placed to be spaced apart from the water tank 100. A first discharge passage 32 through which humidified air moves is formed between the inner shell 180 and the outer reservoir 160.

Referring to FIG. 8, the inner shell 180 is placed to be spaced apart from the outer shell 22. A second discharge passage 34 through which filtered air moves may be formed between the inner shell 180 and the outer shell 22.

The inner shell 180 may have a cylindrical shape in which a top side is opened. The inner shell 180 may have a larger diameter than the outer reservoir 160. A ratio at which an upper end portion of the inner shell 180 is expanded radially may be formed to be large like the upper end portion 162 of the outer reservoir 162.

A shell through-hole 184 is formed on a bottom surface of the inner shell 180. The shell through-hole 184 is placed below the through-hole 164 of the outer reservoir 160. The connector 120 may be placed in the shell through-hole 184.

The inner shell 180 may be made of a transparent material. Referring to FIG. 8, an upper projection 186 protruding upward may be placed in a portion where the shell through-hole 184 is formed. The upper projection 186 of the inner shell 180 may be placed to be in contact with the lower projection 166 of the outer reservoir 160.

A size of the shell through-hole 184 of the inner shell 180 may be formed to be smaller than a size of the through-hole 164 of the outer reservoir 160. The upper projection 186 may be placed inside the lower projection 166 of the outer reservoir 160. That is, an outer circumferential surface of the upper projection 186 may be placed to face an inner circumferential surface of the lower projection 166 of the outer reservoir 160.

The outer sealer 134 may be placed above the upper projection 186.

In the inner shell 180, a pair of first shell projections 188a and 188b on which the pair of first water tank projections 170a and 170b of the outer reservoir 160 are mounted may be placed. The pair of first shell projections 188a and 188b may have a structure protruding downward from the bottom surface of the inner shell 180. Spaces into which the pair of first water tank projections 170a and 170b are formed in the pair of first shell projections 188a and 188b, respectively.

The pair of first shell projections 188a and 188b are placed above the weight sensors 212a and 212b placed in the middle tray 200. Thus, the pair of first shell projections 188a and 188b may transmit the loads of the inner reservoir 102 and the outer reservoir 160 to the weight sensors 212a and 212b.

A second shell projection 190 on which the second water tank projection 168 of the outer reservoir 160 is mounted may be placed in the inner shell 180. A space into which the second water tank projection 168 is inserted may be formed in the second shell projection 190.

Referring to FIG. 8, an exhaust connection pipe 192 that guides humidified air discharged from the second humidification reservoir 350 to the first discharge passage 32 is placed in the inner shell 180. The exhaust connection pipe 192 may have a structure extending downward on the bottom surface of the inner shell 180. The exhaust connection pipe 192 may have a shape corresponding to an exhaust pipe 382 to be described below. The exhaust connection pipe 192 may have an approximately elliptical shape.

Referring to FIG. 8, a lower end portion of the exhaust connection pipe 192 may be connected to an upper end portion of the exhaust pipe 382. The lower end portion of the exhaust connection pipe 192 may be placed inward from the upper end portion of the exhaust pipe 382. The lower end portion of the exhaust connection pipe 192 may be formed with a step for protruding inward of the exhaust pipe 382. The lower end portion of the exhaust connection pipe 192 is formed with an exhaust pipe connection hole 194 opened downward.

The humidifier includes a middle tray 200 that partitions a region in which the water tank 100 is placed and a region in which the humidification module is placed. The middle tray 200 may sense a water level of water held in the water tank 100. The middle tray 200 may emit light to discharged humidified air.

Referring to FIG. 6, the middle tray 200 is placed below the water tank 100. The middle tray 200 is placed above the second humidification reservoir 350 or the first humidification reservoir 300 to be described below. Weight sensors 212a and 212b that sense the water level of the water tank 100 by a weight may be placed in the middle tray 200.

Referring to FIG. 8, a lamp 216 that emits light toward the first discharge passage 32 may be placed in the middle tray 200. The inner shell 180 may be seated on the middle tray 200. The inner reservoir 102 and the outer reservoir 160 may be mounted on the middle tray 200.

Referring to FIG. 7A, the middle tray 200 includes a tray plate 202, and a lamp housing 218 placed on an outer periphery of the tray plate 202 and having the lamp 216 placed therein.

A first hole 204 through which the supply tube 230 passes is formed on one side of the tray plate 202. The first hole 204 may be formed at the center of the tray plate 202. A part of the supply tube 230 is placed above the first hole 204. The connector 120 of the inner reservoir 102 may be connected to the supply tube 230 placed at a top side of the first hole 204.

Referring to FIG. 7A, a first flange 206 protruding upward of the tray plate 202 is placed on a periphery of the first hole 204. Thus, water admitted through a top side of the tray plate 202 may be prevented from moving downward of the middle tray 200.

A second hole 208 through which humidified air discharged from the second humidification reservoir 350 moves is formed on the other side of the tray plate 202. A second flange 210 protruding upward of the tray plate 202 is placed on a periphery of the second hole 204. The second flange 210 may prevent the water admitted through the top side of the tray plate 202 from moving downward of the middle tray 200 through the second hole 208.

The lamp housing 218 is placed along the periphery of the tray plate 202. The lamp housing 218 may be formed in a ring shape. A lamp 216 that emits light upward may be placed within the lamp housing 218. One side of the lamp housing 218 may be made of a material that transmits the light emitted from the lamp 216.

The middle tray 200 may be placed to cover the top sides of the first humidification reservoir 300 and the second humidification reservoir 350. The middle tray 200 is coupled to a humidification module housing 410 to be described below to form a space in which the first humidification reservoir 300 and the second humidification reservoir 350 are placed.

The middle tray 200 is placed on top sides of the first humidification reservoir 300 and the second humidification reservoir 350. The middle tray 200 is placed on an opened top side of the humidification module housing 410. The middle tray 200 may cover the opened top side of the humidification module housing 410.

The water tank 100 may be mounted on the top side of the middle tray 200. The water tank 100 and the inner shell 180 may be placed on the top side of the middle tray 200. Referring to FIG. 7A, weight sensors 212a and 212b that sense the water level of the water tank 100 may be placed on a top surface of the middle tray 200.

A second hole 208 formed so that the humidified air discharged from the second humidification reservoir 350 moves may be formed on one side of the top surface of the middle tray 200. A partial configuration of the supply tube 230 may protrude above the middle tray 200 through the first hole 204 formed in the middle tray 200.

A mounting projection 213 protruding upward may be placed on the top surface of the middle tray 200 so as to maintain the placement of the second shell projection 190 of the inner shell 180. The mounting projection 213 is placed on a periphery of a fixing groove 214 in which the second shell projection 190 is placed.

A peripheral wall 327 of a second top cover 326 to be described below may be placed to be exposed between the middle tray 200 and the humidification module housing 410.

Meanwhile, the weight sensors 212a and 212b may be load cells. Depending on a weight sensing target, various types of load cells are used. In FIG. 7A, a two-point load cell is illustrated.

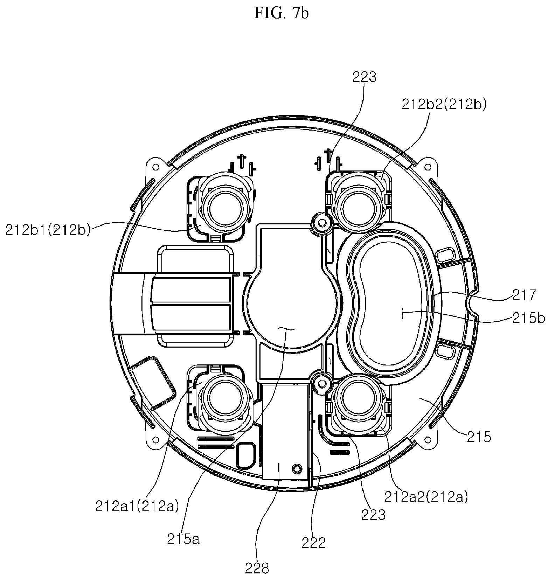

FIG. 7B is a plan view of a tray base according to another embodiment of the present disclosure. In FIG. 7B, a four-point load cell is illustrated.

The middle tray 200 may include a lower tray base 215. The weight sensors 212a and 212b are placed in the tray base 215. A plurality of pressing bodies (not illustrated) are placed on a plurality of weight sensors 212a and 212b, respectively. The plurality of pressing bodies are placed to be in contact with the plurality of weight sensors 212a and 212b, respectively.

A sensor circuit board 228 connected to the plurality of weight sensors 212a and 212b is placed in the tray base 215.

A supply tube hole 215a formed below the first hole 204 and an exhaust hole 215b formed below the second hole 208 are formed in the tray base 215. The supply tube 230 may pass through the first hole 204 and the supply tube hole 215a. A tray sealer 217 is placed on a periphery of the exhaust hole 215b. The tray sealer 217 may prevent water from being admitted.

The plurality of weight sensors 212a and 212b are placed in the tray base 215. The tray base 215 includes a first weight sensor 212a placed on one side of the supply tube hole 215a and a second weight sensor 212b placed in an opposite direction to the first weight sensor 212a with respect to the supply tube hole 215a.

The first weight sensor 212a includes a first front weight sensor 212a1, and a second first rear weight sensor 212a2 placed behind the first front weight sensor 212a1. The second weight sensor 212b includes a second front weight sensor 212b1, and a second first rear weight sensor 212b2 placed behind the second front weight sensor 212b1.

The sensor circuit board 228 is placed between the first front weight sensor 212a1 and the first rear weight sensor 212a2.

A circuit board partition 222 protruding upward behind the sensor circuit board 228 is placed in the tray base 215.

The sensor circuit board 228 is placed in front of the exhaust hole 215b. The sensor circuit board 228 is placed on one side in a left-right direction of the supply tube hole 215a.

The first rear weight sensor 212a2 and the second rear weight sensor 212b2 are placed on both sides of the exhaust hole 215b. The exhaust hole 215b is placed between the first rear weight sensor 212a2 and the second rear weight sensor 212b2.

The first rear weight sensor 212a2 is placed behind the sensor circuit board 228.

The tray base 215 may form a step that protrudes upward in a region where the weight sensors 212a and 212b are placed. In the tray base 215, the weight sensor partition 223 may be placed on a periphery of the region where the weight sensors 212a and 212b are placed.

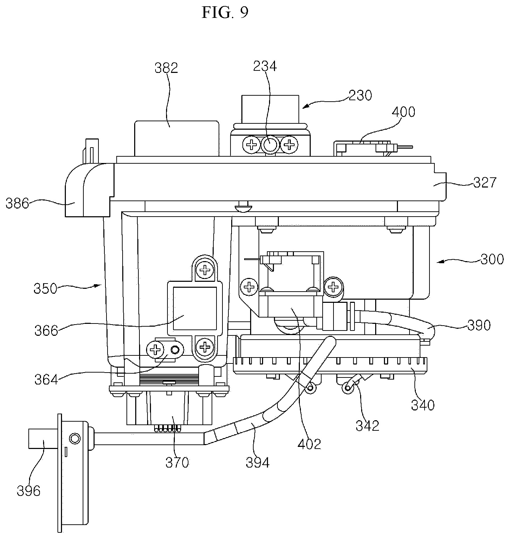

FIG. 9 is a side view of a structure in which a first humidification reservoir and a second humidification reservoir are coupled according to an embodiment of the present disclosure and FIG. 10 is a side view in another direction of the structure in which the first humidification reservoir and the second humidification reservoir are coupled according to an embodiment of the present disclosure.

Referring to FIGS. 9 and 10, a drain pipe valve 396 for opening and closing a drain pipe 394 is placed at an end portion of the drain pipe 384. The drain pipe valve 396 may open and close the drain pipe 394 depending on the placement.

The display 30 may be mounted on the other side of the peripheral surface of the humidification module housing 410.

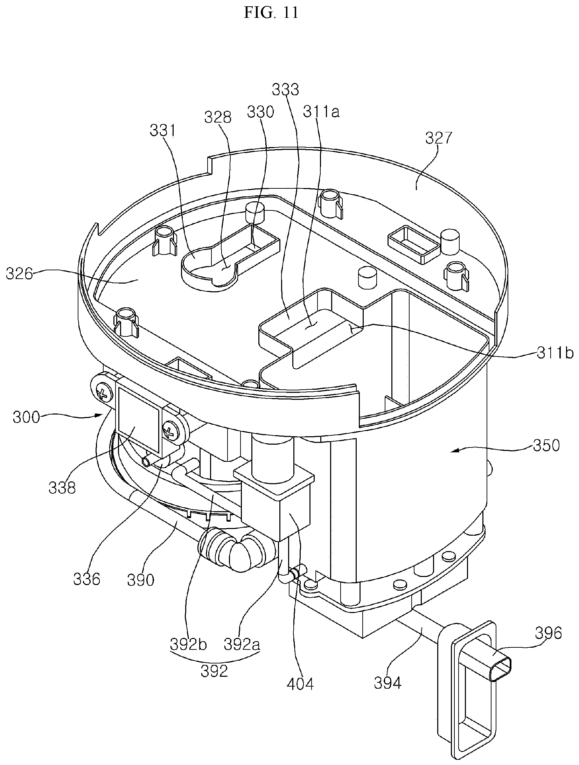

FIG. 11 is a perspective view for describing top surfaces of the first humidification reservoir and the second humidification reservoir according to an embodiment of the present disclosure.

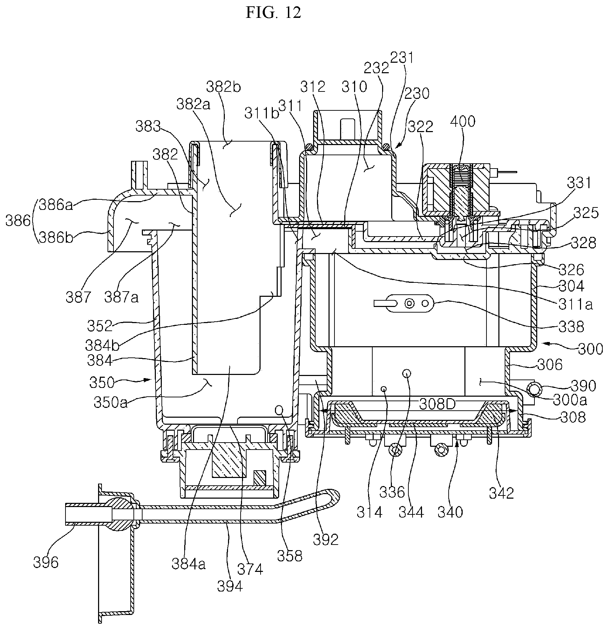

FIG. 12 is a cross-sectional view in one direction of the structure in which the first humidification reservoir and the second humidification reservoir are coupled according to an embodiment of the present disclosure.

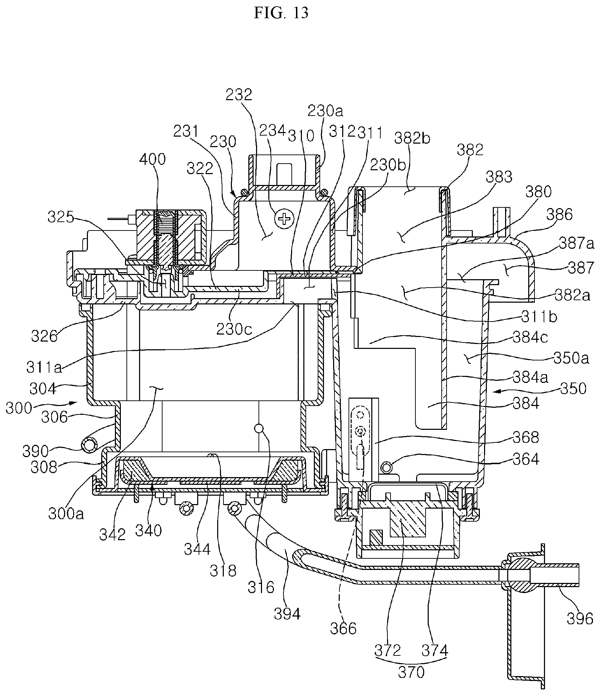

FIG. 13 is a cross-sectional view in a direction different from that of FIG. 12.

Constructions of the supply tube, the first humidification reservoir, the second humidification reservoir, and the exhaust pipe will be described with reference to FIGS. 9 to 13.

The humidifier of the present disclosure may include a humidification module that heats water and generates humidified air. The humidification module may include a first humidification reservoir 300 that heats water and a second humidification reservoir 350 that generates humidified air with a vibrator 370.

The humidifier may include a first connection pipe 390 that connect the first humidification reservoir 300 and the second humidification reservoir 350, and a second connection pipe 392. The first connection pipe 390 may supply water heated by the first humidification reservoir 300 to the second humidification reservoir 350. Referring to FIG. 9, a second valve 402 is placed in the first connection pipe 390. The second valve 402 opens and closes an internal passage of the first connection pipe 390 to supply the water heated by the first humidification reservoir 300 to the second humidification reservoir 350.

The first humidification reservoir 300 and the second humidification reservoir 350 may be connected through a communication pipe 310 placed above the first connection pipe 390.

The water heated by the first humidification reservoir 300 may be supplied to the second humidification reservoir 350 through the first connection pipe 390. Humidified air generated by the first humidification reservoir 300 may move to the second humidification reservoir 350 through the communication pipe 310.

Referring to FIG. 10, a pump 404 is placed in the second connection pipe 392. When the pump 404 operates, the water in the second humidification reservoir 350 may move to the first humidification reservoir 300.

The humidifier includes a first temperature sensor 336 that senses a temperature of the water held within the first humidification reservoir 300, and a first water level sensor 338 that senses a water level of the water held within the first humidification reservoir 300. Referring to FIG. 10, the first temperature sensor 336 and the first water level sensor 338 are placed on one side of the first humidification reservoir 300.

The humidifier includes a second temperature sensor 364 that senses a temperature of the water held within the second humidification reservoir 350, and a second water level sensor 366 that senses a water level of the water held within the second humidification reservoir 350. Referring to FIG. 9, the second temperature sensor 364 and the second water level sensor 366 are placed on one side of the second humidification reservoir 350.

The humidifier includes a sensor 234 that senses a water quality of water present within the supply tube 230. Referring to FIG. 9, the sensor 234 is placed on one side of the supply tube 230. The sensor 234 may sense a water quality of water moving from the water tank 100 The sensor 234 may sense the water quality of water to sense a replacement time of the water softener 140 placed in the water tank 100.

The humidifier of the present disclosure includes a supply pipe 230 that supplies water held in the water tank 100 to the first humidified reservoir 300. The supply tube 230 is placed between the water tank 100 and the first humidification reservoir 300. The supply tube 230 may temporarily hold water discharged from the water tank 100 and supplied to the first humidification reservoir 300.

A supply chamber 232 in which water is temporarily held may be formed in the supply tube 230. A sensor 234 that senses hardness of water held within the supply tube 230 may be placed on one side of the supply tube 230.

The supply pipe 230 may have a structure in which a plurality of components are coupled. The supply tube 230 may be formed by coupling a first top cover 322 and a supply tube cover 231. The supply tube cover 231 may be a structure in which the supply tube cover 231 is placed on a top side of the first top cover 322, and has the supply chamber 232 formed therein by coupling to the first top cover 322. It is also possible to form the supply tube in one structure.

The supply tube 230 includes a top supply tube 230a connected to the connector 120, a middle supply tube 230b extending downward of the top supply tube 230a, and a bottom supply tube 230c extending in a direction perpendicular to the up-down direction on a bottom of the middle supply pipe 230b.

The top supply tube 230a may be placed above the middle tray 200. The top supply tube 230a may have a structure extending upward through the first hole 204 of the middle tray 200.

The middle supply tube 230b may extend below the top supply tube 230a and may have a cylindrical shape. A tube diameter of the middle supply tube 230b may be formed to be larger than a tube diameter of the top supply tube 230a.

The bottom supply tube 230c may extend in a direction perpendicular to the vertical direction on one side of the middle supply tube 230b. The bottom supply tube 230c may form the supply chamber 232 together with the first top cover 322 placed on the top side of the first humidified reservoir 300 placed on the bottom side.

The bottom supply tube 230c may be formed between the supply tube cover 231 and the first top cover 322. The first top cover 322 may have a chamber groove 324 recessed downward in a region where the bottom supply tube 230c is formed.

A first valve 400 is placed at an end portion of the bottom supply tube 230c. A passage formed by the supply tube cover 231 and the first top cover 322 may have a narrow passage shape, and the first valve 400 is placed at an end portion.

A passage formed at an end portion of the supply tube 230 may be opened and closed according to the placement of the first valve 400. The first valve 400 may supply or stop supplying water from the supply tube 230 to a first humidification reservoir wall 302.

The first valve 400 that supplies or stops supplying the water present in the supply tube 230 to the first humidification reservoir 300 may be placed above the first humidification reservoir 300.

A first supply hole 325 may be formed in the first top cover 322. The water present in the supply chamber 232 may move to the first humidification reservoir 300 through the first supply hole 325. The first valve 400 may open and close the first supply hole 325 to supply the water held in the supply chamber 232 to the first humidification reservoir 300.

A sensor 234 that senses a water quality of the water present within the supply chamber 232 is placed in the supply tube 230. The sensor 234 is placed on one side of the middle supply tube 230b. The sensor 234 may be placed above the middle supply tube 230b.

The sensor 234 may be placed above the middle supply tube 230b, and may quickly sense the water quality of the water supplied from the water tank 100. That is, when the water present in the supply chamber 232 is dropped and the water in the water tank 100 is admitted, the water quality of the water admitted from the water tank 100 may be sensed.

The first humidification reservoir 300 has a first chamber 300a that forms a space in which water is held and water is heated.

Referring to FIGS. 12 and 13, the first humidification reservoir 300 may include a first humidification reservoir wall 302 that forms the first chamber 300a, and a heater 340 that is placed on a bottom side of the first humidification reservoir wall 302 and heats the water within the first humidification reservoir wall 302.

The first humidification reservoir wall 302 may have a cylindrical shape in which water is held. The first humidification reservoir wall 302 is opened on the bottom side, and the heater 340 may be placed on the bottom side of the first humidification reservoir wall 302.

Referring to FIGS. 12 and 13, the first humidification reservoir wall 302 may include a bottom reservoir wall 308, a middle reservoir wall 306, and a top reservoir wall 304. The bottom reservoir wall 308, the middle reservoir wall 306, and the bottom reservoir wall 304 may be placed side by side from the bottom side to the top side.

The heater 340 may be placed on the bottom reservoir wall 308. The heater 340 may be placed to protrude inside the bottom reservoir wall 308. However, the heater 340 may be placed to be spaced radially inward from an inner peripheral surface of the bottom reservoir wall 308. The lower reservoir wall 308 may be placed to be spaced apart by a predetermined distance from the heater placed inside. A drain hole 318 is formed on one side of the bottom reservoir wall 308.

Referring to FIGS. 12 and 13, the heater 340 may include a heating element 342 that receives electricity and generates heat, and a heating plate 344 placed in contact with the heating element 342. The heating element 342 may be formed in a ring shape in which one side is opened. The heating element 342 may be placed inside the bottom reservoir wall 308.

The heating plate 344 is placed above the heating element 342 and transmits heat generated by the heating element 342 to the water inside the first humidification reservoir 300. The heating plate 344 may be placed to cover the heating element 342. A partial configuration may be placed to protrude inside the bottom reservoir wall 308 so as to cover the heating element 342. The heating plate 344 inside the bottom reservoir wall 308 may be placed to be spaced apart from the inner peripheral surface of the bottom reservoir wall 308.

Referring to FIG. 12, the middle reservoir wall 306 is placed above the bottom reservoir wall 308. The middle reservoir wall 306 may be formed to have a small diameter to form a space in which a configuration of the second valve 402 is placed within the humidification module housing 410. The middle reservoir wall 306 may be formed to have a small diameter to form a space in which the first connection pipe 390 is placed within the humidification module housing 410.

Referring to FIGS. 10 to 12, the first temperature sensor 336 is placed on one side of the middle reservoir wall 306. A recovery inflow hole 314 through which water is admitted from the second connection pipe 392 is formed on one side of the middle reservoir wall 306. An outflow hole 316 through which water moves out to the first connection pipe 390 may be formed on one side of the middle reservoir wall 300.

The outflow hole 316 may be placed at a position higher than the recovery inflow hole 314. The first temperature sensor 336 may be placed at a position higher than the recovery inflow hole 314. The outflow hole 316 may be placed at a position higher than or equal to the first temperature sensor 336.

Thus, the first temperature sensor 336 may sense a temperature that is changed as the water supplied to the first humidification reservoir 300 is heated. In addition, the first temperature sensor 336 may sense a temperature of water held in the first chamber 300a of the first humidification reservoir 300 after some of the water held within the first humidification reservoir 300 is supplied to the second humidification reservoir 350.

The first temperature sensor 336 may sense a temperature change within the first humidification reservoir 300. The first temperature sensor 336 may sense an abnormal operation of the heater 340 within the first humidification reservoir 300.

The top reservoir wall 304 may extend above the middle reservoir wall 306. A length at which the top reservoir wall 304 extends in the up-down direction may be longer than a length at which the middle reservoir wall 306 extends in the up-down direction. A size of an internal space formed by the top reservoir wall 304 may be larger than a size of an internal space formed by the middle reservoir wall 306 and the bottom reservoir wall 308.

Referring to FIGS. 10 to 12, the first water level sensor 338 is placed on one side of the top reservoir wall 304. The first water level sensor 338 is placed above the first temperature sensor 336. The first water level sensor 338 may sense a water level of water within the first humidification reservoir 300. The first water level sensor 338 may sense a normal water level of the first humidification reservoir 300. Here, the normal water level of the first humidification reservoir 300 may mean a region between an upper end at which water supplied to the first humidification reservoir 300 does not exceed a set water level and a lower end which is lowest water level at which water should be present to operate the heater 340.

The first humidification reservoir 300 may include top covers 322 and 324 placed on the top side of the first humidification reservoir 300. The top covers 322 and 324 are placed on the top side of the top reservoir wall 304.

The top covers 322 and 324 may be placed to cover at least a part of the top side of the first humidification reservoir wall 302. The top covers 322 and 324 may include a first top cover 322, and a second top cover 326 placed below the first top cover 322.

Referring to FIGS. 12 and 13, the first top cover 322 is placed above the second top cover 326. The first top cover 322 may partition the first humidification reservoir wall 302 and the supply tube 230. The first top cover 322 may form one side of the supply chamber 232 that forms the inside of the supply tube 230.

Referring to FIGS. 12 and 13, the first top cover 322 is formed with a first supply hole 325 through which water held in the supply chamber 232 moves. The first valve 400 may be placed above the first supply hole 325 to open and close the first supply hole 225. The first top cover 322 may be placed to be spaced upward from an upper end of the top reservoir wall 304.

The first top cover 322 may have a structure connected to the exhaust pipe 382 to be described below. The first top cover 322 may be integrally formed with the exhaust pipe 382. The first top cover 322 may have a smaller area than the second top cover 326.

The first top cover 322 may be placed to be spaced apart from the second top cover 326. That is, the first top cover 322 may be placed to be spaced apart upward from the second top cover 326.

A part of the first top cover 322 may constitute a part of the supply tube 230. The first top cover 322 may have a chamber groove 324 recessed downward in a region where the supply tube 230 is formed.

Referring to FIGS. 12 and 13, the second top cover 326 may be placed to cover the first supply hole 325 formed in the first top cover 322. A second supply hole 330 that sends the water moving through the first supply hole 325 to the first humidification reservoir 300 may be formed in the second top cover 326. The second supply hole 330 is placed to be spaced apart from the first supply hole 325 in the direction perpendicular to the up-down direction.

Referring to FIG. 11, a supply passage 328 through which the water moving to the first supply hole 325 moves to the second supply hole 330 may be formed between the second top cover 326 and the first top cover 322. In the second top cover 326, a supply passage rib 331 that protrudes upward to form a supply passage 328 may be placed in the second top cover 326. The supply passage rib 331 may protrude above the second top cover 326 and may be placed in contact with a bottom surface of the first top cover 322.

The supply passage 328 may have a structure in which a direction in which the supply passage 328 extends is different from a direction in which the chamber groove 324 extends. As one embodiment, the direction in which the supply passage 328 extends may be formed to be perpendicular to the direction in which the chamber groove 324 extends.

Referring to FIGS. 12 and 13, a first communication hole 311a is formed in the second top cover 326. The first communication hole 311a may connect the first humidification reservoir 300 and the second humidification reservoir 350. That is, the humidified air generated by the first humidification reservoir 300 may move to the second humidification reservoir 350 through the communication hole 311a.

The first communication hole 311a may have a structure opened in the up-down direction. Thus, the humidified air generated by the heater 340 inside the first humidification reservoir 300 may move upward through the first communication hole 311a.

The second top cover 326 may include an upper rib 333 extending upward on a periphery of the first communication hole 311a. The upper rib 333 may have a structure that protrudes upward on a periphery of the second top cover 326 in which the first communication hole 311a is formed.

An upper cover 312 may be placed above the second top cover 326. The upper cover 312 may have a structure connected to the upper rib 333. The upper cover 312 may form a communication passage 311 therein together with the upper rib 333.

The communication passage 311 may connect the first communication hole 311a formed in the first humidification reservoir 300 and a second communication hole 311b formed in the second humidification reservoir 350. The communication passage 311 may be placed above the first humidification reservoir 300. Thus, humidified air generated and rising by the first humidification reservoir 300 may move to the communication passage 311 through the first communication hole 311a.

The communication passage 311 may be formed by the upper rib 333 and the upper cover 312 of the second top cover 326. The communication passage 311 extends in a horizontal direction to the second communication hole 311b.

A second chamber 350a that holds water and atomizes water is formed within the second humidification reservoir 350.

Referring to FIGS. 12 and 13, the second humidification reservoir 350 may include a second humidification reservoir wall 352 that forms the second chamber 350a, and a vibrator 370 that is placed below the second humidification reservoir wall 352 and vibrates to atomize water within the second humidification reservoir wall 352.

The second humidification reservoir wall 352 may have a columnar shape that forms a space therein. The vibrator 370 is placed below the second humidification reservoir wall 352. The second humidification reservoir wall 352 may have shape in which a cross-sectional area formed in the horizontal direction increases upward.

An upper end of the second humidification reservoir wall 352 may be formed higher than an upper end of the first humidification reservoir wall 302.

The vibrator 370 is placed on the bottom surface of the second humidification reservoir wall 352. Referring to FIG. 12, an inflow hole 358 through which the water in the first humidification reservoir wall 302 is supplied may be formed on one side of the second humidification reservoir wall 352. A recovery discharge hole 360 through which the water held within the second humidification reservoir 350 moves to the first humidification reservoir 300 may be formed on one side of the second humidification reservoir wall 350.

The inflow hole 358 may be formed at a position lower than the outflow hole 316 formed in the first humidification reservoir wall 302. The recovery discharge hole 360 may be formed at a position lower than the inflow hole 358.

Referring to FIG. 12, the vibrator 370 may be placed on the bottom surface of the second humidification reservoir 350. A recovery groove 361 forming a space in a peripheral direction in a region in which the recovery discharge hole 360 is formed is formed on one side of the second humidification reservoir wall 352. The recovery groove 361 may be formed on one side of the vibrator 370. That is, the recovery groove 361 is placed on one side of the vibrator 370 placed on the bottom surface of the second humidification reservoir 350. That is, the recovery groove 361 may form a space at a lower end portion inside the second humidification reservoir wall 352.

The recovery discharge hole 360 may be formed at a position lower than the recovery inflow hole 314 formed in the first humidification reservoir wall 302.

Referring to FIG. 13, the second temperature sensor 364 is placed on one side of the peripheral surface of the second humidification reservoir 350. The second temperature sensor 364 may be placed at a position higher than the recovery discharge hole 360. The second temperature sensor 364 may be placed at a position lower than or equal to the inflow hole 358.

The second temperature sensor 364 may sense a temperature of water supplied to the inside of the second humidification reservoir 350. Thus, the second temperature sensor 364 may sense whether water at a set temperature or higher is supplied to the inside of the second humidification reservoir 350.

Referring to FIGS. 9 and 13, the second water level sensor 366 is placed on one side of the peripheral surface of the second humidification reservoir 350. The second water level sensor 366 may sense a water level of water present within the second humidification reservoir 350. The second water level sensor 366 may sense a lowest water level within the second humidification reservoir 350 at which the vibrator 350 may operate. Further, the second water level sensor 366 may sense an amount of the water held within the second humidification reservoir 350. The second water level sensor 366 may sense an optimal water level for operating the vibrator 370.

Referring to FIG. 13, a water level sensor cover 368 may be placed within the second humidification reservoir 350. The water level sensor cover 368 may be placed to be spaced apart from the second water level sensor 366 by a predetermined distance. The water level sensor cover 368 may be placed between the second water level sensor 366 and the vibrator 370. The water level sensor cover 368 may have a structure that protrudes upward from the bottom surface of the second humidification reservoir 350.

Even though a water level within the second humidification reservoir 350 is changed by the vibrator 370, the second water level sensor 366 may sense a more accurate wave level by the water level sensor cover 368.

The second communication hole 311b is formed at an upper end portion of a peripheral wall of the second humidification reservoir 350. The second communication hole 311b is formed at the upper end portion of the peripheral wall of the second humidification reservoir 350. The second communication hole 311b is opened in a direction in which the first humidification reservoir 300 is placed.

Referring to FIGS. 12 and 13, the second communication hole 311b is connected to a communication passage. The second communication hole 311b is opened in the horizontal direction.

Two vibrators 370 may be placed on the bottom surface of the second humidification reservoir 350. Two vibrators 370 may be placed to be spaced apart from each other in the direction perpendicular to the up-down direction.

The vibrator 370 includes a vibration element 372 that generates vibration, and a vibration element cover 374 placed above the vibration element 372. The vibration element cover 374 is placed to be in contact with the water held within the second humidification reservoir 350. The vibration element cover 374 transmits the vibration generated by the vibration element 372 to the water held within the second humidification reservoir 350.

The vibrator 370 generates humidified air using the water held in the second humidification reservoir 350.

Referring to FIGS. 12 and 13, the second humidification reservoir 350 includes a humidification reservoir cover 380 placed on the top side of the second humidification reservoir wall 352. The humidification reservoir cover 380 may supply humidified air generated by the second humidification reservoir 350 the first discharge passage 32.

The humidification reservoir cover 380 includes an exhaust pipe 382 that sends humidified air upward. The exhaust pipe 382 may have a structure extending upward from the humidification reservoir cover 380. The exhaust pipe 382 has an approximately elliptical columnar shape.

Referring to FIGS. 12 and 13, the exhaust pipe 382 is placed above a pair of vibrators 370. Thus, humidified air generated by the vibrator 370 may quickly move to the exhaust pipe 382. Further, when the water held in the second chamber 350a of the second humidification reservoir 350 is splashed upward by the vibrator 370, the water may move to the inside of the exhaust pipe 382.

An upper end of the exhaust pipe 382 may be placed to be in contact with the middle tray 200 (see FIG. 8). Here, the upper end of the exhaust pipe 382 may be placed to be in direct contact with the middle tray 200 or to be in indirect contact with the middle tray through a separate sealing member 388.

An exhaust pipe inlet 382a (or an exhaust hole) is formed at a lower end of the exhaust pipe 382. An exhaust pipe outlet 382b is formed at the upper end of the exhaust pipe 382. The exhaust pipe 382 may form an exhaust pipe passage 383 between the exhaust pipe inlet 382a and the exhaust pipe outlet 382b.

An air supply hole 387 is formed on one side of the humidification reservoir cover 380. External air may be admitted into the second humidification reservoir 350 through the air supply hole 387. The air supply hole 387 may have a shape that opened upward.

The humidification reservoir cover 380 includes an air guide cover 386 that supplies air moving through the blower channel 70 to the second humidification reservoir 350. The air guide cover 386 causes some of the air moving to the outside of the humidification module housing 410 to move into the second humidification reservoir 350 through the air supply hole 387.

The air guide cover 386 may guide the air moving to the outside of the second humidification reservoir 350 to move into the second humidification reservoir 350.

The air guide cover 386 may be placed to be spaced upward from the air supply hole 387 and have a structure extending in the horizontal direction from the exhaust pipe 382. The air guide cover 386 may extend from a peripheral wall of the exhaust pipe 382, and may be placed at a position spaced apart upward from the upper end of the second humidification reservoir wall 352.

Referring to FIGS. 12 and 13, the air guide cover 386 may include a horizontal wall 386a extending in the horizontal direction from the exhaust pipe 382 and a vertical wall 386b extending downward from an end portion of the horizontal wall 386a. The horizontal wall 386a may be placed to be spaced apart upward from the air supply hole 387 and the upper ends of the second humidification reservoir wall 352.

The vertical wall 386b is placed to be spaced apart outward from the peripheral wall of the second humidification reservoir 350. The vertical wall 386b is placed to be spaced apart outward from a peripheral wall of the humidification module housing 410. A lower end of the vertical wall 386b may be located to be lower than the upper end of the second humidification reservoir wall 352.

Some of the air moving through the blower channel 70 may move upward to a space between the humidification module housing 410 and the vertical wall 386b, move to the top side of the second humidification reservoir 350 along the horizontal wall 386a, and then move to a bottom of the second chamber 350a of the second humidification reservoir 350 along the air supply hole 387.

An air inflow passage 387 through which air moves may be formed below the air guide cover 386. The air inflow passage 387 is placed above the communication passage 311. The air supply hole 387 may be placed above the communication passage 311.

The humidification reservoir cover 380 includes a bottom extension wall 384 that protrudes toward the inside of the second humidification reservoir 350 from the humidification reservoir cover 380. The bottom extension wall 384 extends downward from the humidification reservoir cover 380. The bottom external wall 384 has a structure that protrudes downward in a region where the exhaust pipe 382 is formed.

Referring to FIGS. 12 and 13, the bottom extension wall 384 is placed between the exhaust pipe inlet 382a and the air supply hole 387. The bottom extension wall 384 may have a shape bent toward the exhaust pipe inlet 382a when viewed from the top side. Thus, air admitted into the second humidification reservoir 350 through the air supply hole 387 may move along the bottom of the second chamber 350a and an inner circumferential surface of the second humidification reservoir wall 352.

The bottom extension wall 384 may extend downward between the exhaust pipe inlet 382a and the air supply hole 387. The bottom extension wall 384 may allow the air admitted into the second humidification reservoir 350 through the air supply hole 387 to move to the bottom of the second chamber 350a.

The bottom extensional wall 384 is not placed in a direction in which the second communication hole 311b is formed. That is, the bottom extensional wall 384 is not placed in a direction in which the second communication hole 311b is opened. Thus, humidified air admitted into the second humidification reservoir 350 through the second communication hole 311b may move to the exhaust pipe inlet 382a of the exhaust pipe 382.

The bottom extensional wall 384 includes a first bottom extensional wall 384a that extends downward from the exhaust pipe 382 at a portion where the air supply hole 387 is formed, a second bottom extensional wall 384b that is placed on one side of the first bottom extensional wall 384a, and a third bottom extensional wall 384c that is placed on the other side of the first bottom extension wall 384a.

The second bottom extensional wall 384b and the third bottom extensional wall 384c may be placed in opposite directions to each other. The second bottom extensional wall 384b and the third bottom extensional wall 384c may be placed to face each other.

A lower end of the first bottom extensional wall 384a is formed lower than an upper end of the water level sensor cover 368. A lower end of each of the second bottom extensional wall 384b and the third bottom extensional wall 384c is formed higher than the upper end of the water level sensor cover 368. The water level sensor cover 368 may be placed below the second bottom extensional wall 384b or the third bottom extensional wall 384c.

The lower end of the first bottom extensional wall 384a may be located lower than the lower end of the second bottom extensional wall 384b or the lower end of the third bottom extensional wall 384c. A hole through which the humidified air moving in the second communication hole 311b moves into the exhaust pipe 382 may be formed in a region facing the second communication hole 311b.

The humidification reservoir cover 380 may be integrally formed with the first top cover 322.

The first connection pipe 390 may supply water from the first humidification reservoir 300 to the second humidification reservoir 350. One side of the first connection pipe 390 may be connected to the first humidification reservoir 300, and the other side may be connected to the second humidification reservoir 350. The first connection pipe 390 may connect the outflow hole 316 of the first humidification reservoir 300 and the inflow hole 358 of the second humidification reservoir 350. The first connection pipe 390 may be placed so as to be lowered downward toward the inflow hole 358 from the outflow hole 316.

The first connection pipe 390 may extend along a circumferential periphery of the first humidification reservoir wall 302. The inflow hole 358 and the outflow hole 316 may be placed in different directions. Thus, the first connection pipe 390 may have a structure that extends along the periphery of the first humidification reservoir wall 302.

The first connection pipe 390 may be formed to be longer than the second connection pipe 392. The second valve 402 may be placed in the first connection pipe 390. The second valve 402 may be placed closer to the first humidification reservoir 300 than the second humidification reservoir 350. The second valve 402 may be placed closer to the outflow hole 316 than the inflow hole 358.

The second connection pipe 392 may supply water in the second humidification reservoir 350 to the first humidification reservoir 300. A pump 404 is placed in the second connection pipe 392. The second connection pipe 392 may connect the recovery discharge hole 360 of the second humidification reservoir wall 352 and the recovery inflow hole 314 of the first humidification reservoir wall 302.

The recovery discharge hole 360 may be located lower than the recovery inflow hole 314. The pump 404 may be placed above the recovery discharge hole 360 and the recovery inflow hole 314.

The second connection pipe 392 may include a pump inflow pipe 392a connecting the second humidification reservoir 350 and the pump 404, and a pump outflow pipe 392b connecting the pump 404 and the first humidification reservoir 300. The pump 404 may be placed on one side of the second humidification reservoir 350.

The humidifier includes a drain pipe 394 that drains the water present in the first humidification reservoir 300, and a drain pipe valve 396 that is placed at an end portion of the drain pipe 394, and opens and closes the drain pipe 394. Referring to FIG. 11, the drain pipe 394 may be connected to one side of the first humidification reservoir 300. The drain pipe valve 396 may be placed at the end portion of the drain pipe 394.

The drain pipe 394 may discharge the water held in the first humidification reservoir 300 to the outside. Referring to FIG. 10, the drain pipe 394 may extend to the outside of the humidification module housing 410.

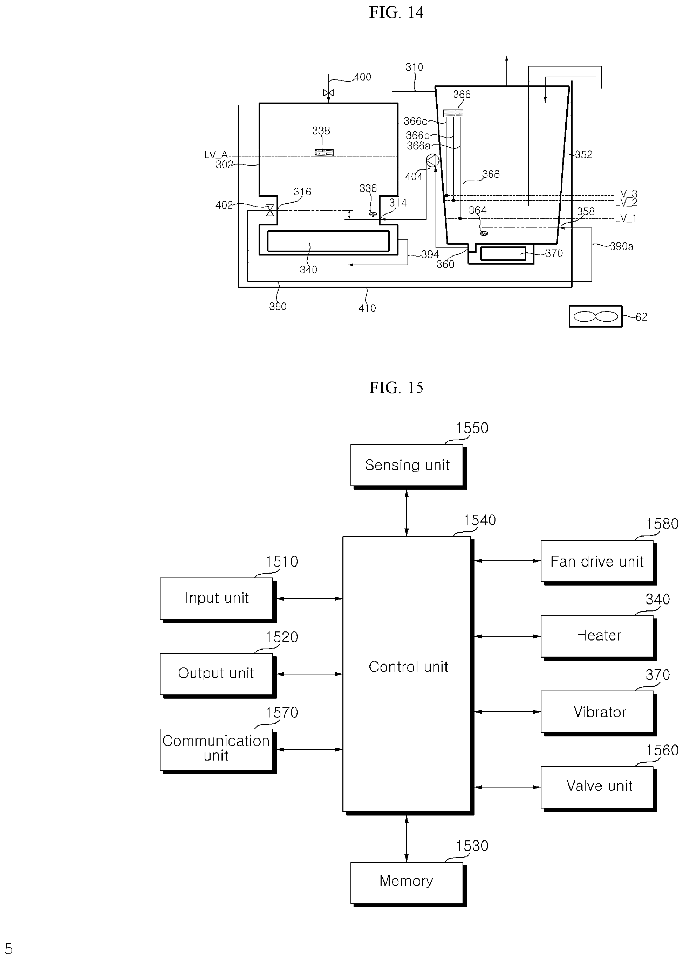

FIG. 14 is a schematic diagram for describing a specific connection relationship between the first humidification reservoir and the second humidification reservoir, and a placement relationship of internal components according to an embodiment of the present disclosure.

Referring to FIG. 14, various sensors and valves placed in each of the first humidification reservoir 300 and the second humidification reservoir 350, and operations of the first humidification reservoir 300 and the second humidification reservoir 350 will be described.

The first humidification reservoir 300 heats the water supplied from the water tank 100. The water in the water tank 100 may be supplied to the top side of the first humidification reservoir 300. The first valve 400 may open the supply tube 230 to supply the water to the first humidification reservoir 300.

The first valve 400 may be operated based on the water level sensed by the first water level sensor 338. The first valve 400 may open the supply tube 230 when the water level sensed by the first water level sensor 338 is lower than a set water level. The set water level as a water level that serves as a reference for opening and closing the supply tube 230 may also be referred to as a water supply level or a reference water level LV-A.

The first valve 400 closes the supply tube 230 when the water level sensed by the first water level sensor 338 is equal to or higher than the set water level. When the second valve 402 opens the first connection pipe 390, the first valve 400 may close the supply tube 230. Thus, as the water that moves through the first connection pipe 390, water of which heating is completed in the first humidification reservoir 300 may move.

The first valve 400 opens the supply tube 230 when a water level sensed by the sensor 234 is equal to or higher than a set water level. The sensor 234 may measure the water quality by measuring electrical conductivity of water. That is, the sensor 234 may sense a concentration of ions by measuring the electrical conductivity of the water. Thus, water having an improved water quality by passing through the water softener 140 may be supplied to the first humidification reservoir 300.

When water is supplied to the first humidification reservoir 300 at a predetermined water level and the first valve 400 closes the supply tube 230, the heater 340 may operate. The heater 340 heats the water held in the first humidification reservoir 300. Humidified air generated by operating the heater 340 may move to the second humidification reservoir 350 through the communication pipe 310.

When the heater 340 operates, the blower fan 62 may operate. That is, when the heater 340 heats the water held in the first humidification reservoir 300, the blower fan 62 may operate to supply air to the second humidification reservoir 350. The blower fan 62 may supply air to the second humidification reservoir 350 to cool the inside of the second humidification reservoir 350.

The heater 340 may operate until the temperature of the water sensed by the first temperature sensor 336 reaches 100 degrees. The water held in the first humidification reservoir 300 is heated to a boiling point to be sterilized. The second valve 402 opens the first connection pipe 390 when the temperature of the water sensed by the first temperature sensor 336 reaches 100 degrees. The second valve 402 may open the first connection pipe 390 after the temperature of the water sensed by the first temperature sensor 336 reaches 100 degrees.

The first temperature sensor 336 may be placed at a position equal to or lower than the outflow hole 316. Thus, after water in the second humidification reservoir 350 is discharged to the first connection pipe 390, a temperature of remaining water may be sensed.

When the second valve 402 is opened, the water held in the first humidification reservoir 300 moves to the second humidification reservoir 350 by gravity. When the second valve 402 is opened, water may move until the water levels of the first humidification reservoir 300 and the second humidification reservoir 350 are equal to each other. When the second valve 402 is opened, the water level of the first humidification reservoir 300 may be lowered up to a height of the outflow hole 316 formed in the first humidification reservoir 300.

The second valve 402 opens the first connection pipe 390 when the second water level sensor 366 is lower than an optimal height at which the vibrator 370 of the second humidification reservoir 350 may operate. The second valve 402 opens the first connection pipe 390 when there is a difference between the water levels of the first humidification reservoir 300 and the second humidification reservoir 350 sensed by the first water level sensor 338 and the second water level sensor 366.

The second valve 402 may be opened for a set time. That is, by considering a time when the water levels of the first humidification reservoir 300 and the second humidification reservoir 350 are equal to each other, the second valve 402 may be opened for the set time, and when the set time elapses, the first connection pipe 390 may be closed. By considering a time for which the water in the first humidification reservoir 300 moves to the second humidification reservoir 350, the second valve 402 may be opened for the set time.

While the second valve 402 is opened, the blower fan 62 may operate. The air admitted to the second humidification reservoir 350 by operating the blower fan 62 may cool the water admitted to the second humidification reservoir 350 through the first connection pipe 390.

The second temperature sensor 364 may sense the temperature of the water held in the second humidification reservoir 350. The second temperature sensor 364 may sense the temperature of the water admitted to the second humidification reservoir 350 through the inflow hole 358. The vibrator 370 may operate when the temperature of the water sensed by the second temperature sensor 364 is equal to or lower than a set temperature. The set temperature for operating the vibrator 370 may be set by considering prevention of damage to the vibrator 370.

The second temperature sensor 364 may be placed at the same height as the inflow hole 358 or at a lower height than the inflow hole 358. Thus, a temperature of the water admitted through the inflow hole 358 may be sensed.

The second water level sensor 366 may sense the water level of the second humidification reservoir 350. The second water level sensor 366 may sense a lowest water level of the second humidification reservoir 350 at which the vibrator 350 does not operate. When the water level of the second humidification reservoir 350 sensed by the second water level sensor 366 is formed to be lower than the set water level, the operation of the vibrator 370 may be stopped. The lowest water level at which the operation of the vibrator 370 is stopped may be determined based on the water level of the water held in the second humidification reservoir 350 relative to a vibration level of the vibrator 370.

The second water level sensor 366 may sense a water level at which the vibrator 370 operates optimally. The second water level sensor 366 may sense an upper limit water level and a lower limit water level at which the operation of the vibrator 370 may be optimal at a position at which the water in the second humidification reservoir 350 is higher than the lowest water level at which the operation of the vibrator 370 is stopped.

The second water level sensor 366 may be a sensor that may sense a plurality of levels. For example, the second water level sensor 366 may be a three-channel (366a, 366b, and 366c) sensor that may sense water levels of three levels LV_1, LV_2, and LV_3. A first channel 366a may sense a first water level LV_1. The first water level LV_1 may be a lowest water level that may be sensed by the second water level sensor 366.

A second channel 366b may sense a second level LV_2, and a third channel 366c may sense a third level LV_3. The second level LV_2 may be a water level higher than the first level LV_1, and the third level LV_3 may be a water level higher than the second level LV_2.

The first water level LV_1 may be the lowest water level. The second water level LV_2 and the third water level LV_3 may be a management water level range corresponding to the vibrator 370. The second water level LV_2 may be a lower limit water level of the management water level range, and the third water level LV_3 may be an upper limit water level of the management water level range.

In the second humidification reservoir 350, the water level sensor cover 368 is placed between the second water level sensor 366 and the vibrator 370, and stable water level sensing is thus possible even during the operation of the vibrator 370.

The vibrator 370 may operate when the water level sensed by the second water level sensor 366 is equal to higher than the set water level. The vibrator 370 may include two vibration elements 372. Thus, two vibration elements 372 may operate individually. Two vibration elements 372 may operate selectively.

When the vibrator 370 operates, the blower fan 62 may operate. Thus, humidified air generated by the vibrator 370 may be discharged to the outside of the humidifier together with the air moving from the second humidified water tank 350 to the first discharge passage 32 by the blower fan 62. The blower fan 62 may activate the movement of the humidified air generated by the vibrator 370.

The vibrator 370 and the heater 340 may operate simultaneously. In this case, the humidified air generated by the first humidification reservoir 300 move to the first discharge passage 32 through the second humidification reservoir 350, and the humidified air generated by the second humidification reservoir 350 may also move to the first discharge passage 32.

The pump 404 allows the water in the second humidification reservoir 350 to move to the first humidification reservoir 300. The pump 404 may operate after the operation of the vibrator 370 is stopped. The pump 404 may operate after the second valve 402 closes the first connection pipe 390. When the pump 404 operates, the first valve 400 may close the supply tube 230. When the pump 404 operates, the operation of the blower fan 62 may be stopped.

The recovery discharge hole 360 may be formed on one side of a height at which the vibrator 370 is located. The recovery discharge hole 360 is placed at a lower position than the inflow hole 358 formed in the second humidification reservoir 350. The pump 404 may be placed at a position higher than positions where the recovery discharge hole 360 and the recovery inflow hole 314 are formed. Thus, the water in the second humidification reservoir wall 352 may be sucked and the water may be supplied to the first humidification reservoir 300.

The pump 404 may operate in consideration of the water level of the first humidification reservoir 300 sensed by the first water level sensor 338 and the water level of the second humidification reservoir 350 sensed by the second water level sensor 366. In a state where the water level of the first humidification reservoir 300 is equal to or higher than a proper water level, the operation of the pump 404 may be prevented.

The water held in the first humidification reservoir 300 may be discharged to the outside through the drain pipe 394. When the drain pipe valve 396 opens the drain pipe 394, the water held in the first humidification reservoir 300 may be discharged to the outside. The drain hole 317 formed in the first humidification reservoir 300 may be placed at a position where the heater 340 is placed. Water stored between the heater 340 and the first humidification reservoir 300 may move to the drain pipe 394 through the drain hole 318.

FIG. 15 is a block diagram of a humidifier according to an embodiment of the present disclosure.

Referring to FIG. 15, a humidifier according to an embodiment of the present disclosure may include a control unit 1540 that controls an overall operation of the humidifier to provide a humidification and/or air purification function.

At least a part of an internal block of the humidifier illustrated in FIG. 15, such as a control unit 1540, may be placed within a casing 10. For example, the control unit 1540 may be mounted on a circuit board 76 placed in a control box 74.

A blower fan 62 for controlling a flow in which sucked air is purified through a filter 50 and then discharged is installed within the casing 10.

The control unit 1540 may control a revolution per minute (RPM) of the blower fan 62 in response to an operation mode. A fan drive unit 1580 drives the blower fan 62 according to the control of the control unit 1540.

A fan motor 64 rotates the blower fan 62 according to a control signal received by the fan drive unit 1580. The fan drive unit 1580 controls the rotation of the blower fan 62, and the operation of the fan drive unit 1580 is controlled by the control unit 1540. The fan drive unit 1580 may include a power conversion device such as an inverter to operate the fan motor 64.

The humidifier includes a heater 340, a vibrator 370, and a valve unit 1560. The control unit 1540 may control the heater 340, the vibrator 370, and the valve unit 1560.

For example, the valve unit 1560 includes a first valve 400 placed in a supply tube 230 that connects a water tank 100 and a first humidification reservoir 300, and a second valve 402 that connects the first humidification reservoir 300 and a second humidification reservoir 350, and opens and closes a first connection pipe 390.

The control unit 1540 may open the supply tube 230 when a water level sensed by a first water level sensor 338 is lower than a reference water level LV-A. The control unit 1540 may control the first valve 400 in an open state to open the supply tube 230.

When the supply tube 230 is opened, water is supplied from the water tank 100 to the first humidification reservoir 300. The control unit 1540 operates the heater 340 to heat water in a first chamber 300a. The heater 340 heats the water in the first chamber 300a formed in the first humidification reservoir 300.

The control unit 1540 may control the second valve 402 in response to a water level sensed by a second water level sensor 366.

The second water level LV_2 may be a low water level at which water supplying is started, and the third water level LV_3 may be a full water level at which water supplying is finished. The first water level LV_1 may be a poor water level at which the operation is stopped.

The control unit 1540 may control the second valve 402 in the open state to open the first connection pipe 390. When the first connection pipe 390 is opened, water heated by operating the heater 340 in the first humidification reservoir 300 moves to the second humidification reservoir 350.

Meanwhile, the first humidification reservoir 300 and the second humidification reservoir 350 are connected through a communication pipe 310. Vapor generated by operating the heater 340 in the first humidification water reservoir 300 moves to the second humidification reservoir 350 through the communication pipe 310.

The control unit 1540 may operate the vibrator 370 in response to the operation mode including the humidification function. The control unit 1540 may control a duty of the vibrator 370 in response to the operation mode. The control unit 1540 may generate humidified air by operating the vibrator 370.

In the second humidification reservoir 350, an air supply hole 387 through which the air moving by the blower fan 62 is supplied to the second chamber 350a is formed. In the second humidification reservoir 350, an exhaust hole 382a that discharges humidified air generated by the second chamber 350a to the outside is formed. An exhaust pipe 382 sends the humidified air generated by the second humidification reservoir 350 to a first discharge passage 32. The exhaust hole 382a is formed at a lower end of the exhaust pipe 382.

The humidified air discharged from the second humidification reservoir 350 may move to the first discharge passage 32. Meanwhile, air filtered by the filter 50 may move to a second discharge passage 34. In the mixture passage 13, the air moving through the first discharge passage 32 and the air moving through the second discharge passage 34 may be mixed together.

The control unit 1540 may operate the heater 340 in response to the operation mode. The operation mode including the humidification function may include a mode in which the heater 340 is driven according to a condition and a mode in which the heater 340 is always driven.

The control unit 1540 may control a duty of the heater 340 in response to the operation mode. Further, the control unit 1540 may control an output of the heater 340 in response to the operation mode.

The control unit 1540 may control the humidifier according to a humidification amount set for each operation mode. The control unit 1540 may control the blower fan 62, the heater 340, and the vibrator 370 based on the humidification amount.

The control unit 1540 may recover residual water by operating the pump 404 when a humidification operation ends.

Meanwhile, the humidifier may include a memory 1530, a sensing unit 1550, and a communication unit 1570.

The memory 1530 may store data for operation control of the humidifier, data sensed or measured through the sensing unit 1550 during the operation, and data received through the communication unit 1570. Meanwhile, the humidifier may include a buffer for temporarily storing data, and the buffer may be included in the control unit 1540 or the memory 1530.

The control unit 1540 may process various types of data received through the communication unit 1570 to update the memory 1530. For example, when the data input through the communication unit 1570 is updated data for an operation program pre-stored in the memory 1530, the data may be used to update the memory 1530 and when the input data is a new operation program, the data may further be stored in the memory 1530.

The sensing unit 1550 may include one or more sensors to measure a water temperature, a water level, a humidity, or the like, or to sense an operating state of the humidifier.

For example, the sensing unit 1550 may include a first water level sensor 338 that senses the water level of the water held within the first humidification reservoir 300, and a first temperature sensor 336 that senses the temperature of the water held within the first humidification reservoir 300, a second water level sensor 366 that senses the water level of the water held within the second humidification reservoir 350, and a second temperature sensor 364 that senses the temperature of the water held within the second humidification reservoir 350.

For example, the sensing unit 1550 may include a humidity sensor (not illustrated).

The control unit 1540 may drive the vibrator 370 according to the water levels sensed by the water level sensors 338 and 366, a humidity of the indoor space sensed by the humidity sensor, a desired humidity set by the user, an amount of fumes, the operation mode, and the like.

The control unit 1540 may control a flow of data input or output to the humidifier, and generate and apply a control command based on the data input from the sensing unit 1550.

Meanwhile, the humidifier may be communicatively connected to other devices such as a server, a home appliance, a terminal, and the like through the communication unit 1570 to transmit and receive data.

The input unit 1510 may receive various user commands related to the operation of the humidifier, and may transfer a control signal corresponding to the input command to the control unit 1540. The input unit 1510 may include a touch pad, a physical button, and the like.

The output unit 1520 may include a display device such as the display 30 a light emitting diode (LED) (not illustrated), or the like. For example, the output unit 1520 may display information such as an operation state of the humidifier, an operating state related to occurrence of an error, and the like, an indoor temperature, a target temperature, or the like.

The output unit 1520 may include an audio device such as a speaker (not illustrated), a buzzer (not illustrated), or the like. For example, the output unit 1520 may output an effect sound for the operation state of the humidifier, and output a predetermined warning sound when an error occurs.

The control unit 1540 may be connected to each component provided in the humidifier. For example, the control unit 1540 may mutually transmit and/or receive signals to and/or from each component provided in the humidifier, and control an overall operation of each component.

The control unit 1540 may include at least one processor, and control an overall operation of the humidifier by using the processor included therein. Here, the processor may be a general processor such as a central processing unit (CPU), Of course, the processor a dedicated device such as ASIC or another hardware based processor.

Meanwhile, the control unit 1540 may control the overall operation of the humidifier, and control a humidification function, an air purification function, and various sterilization functions.

The humidifier may provide a plurality of operation modes. For example, it is possible to provide a humidification operation mode that provides the humidification function, an air purification mode that provides the air purification function, and a humidification and purification mode that provides both the humidification function and the air purification function. Further, the humidification operation mode may include a cozy humidification mode in which the heater 340 is always driven and a pure humidification mode in which the heater 340 is driven according to conditions.

In the present disclosure, the humidification operation which provides a humidification function may be the humidification operation mode, the humidification purification mode, the cozy humidification mode, or the pure humidification mode.

Meanwhile, each operation mode may include a plurality of operation steps in which control options of the blower fan 62, the heater 340, and the vibrator 370 are set differently. For example, the plurality of operation steps may include a bedtime operation step, a weak operation step, a medium operation step, a strong operation step, and a turbo operation step in order of operation intensity.

Further, the control unit 1540 may determine whether the water tank 100 is mounted and the water level based on the data sensed by the weight sensors 212a and 212b, and may control the operation of the humidifier such as the humidification operation, or the like. Further, since a situation in which the water tank 100 is not mounted is a normal situation, if the water tank 100 is not sensed during the operation, emergency control is required.

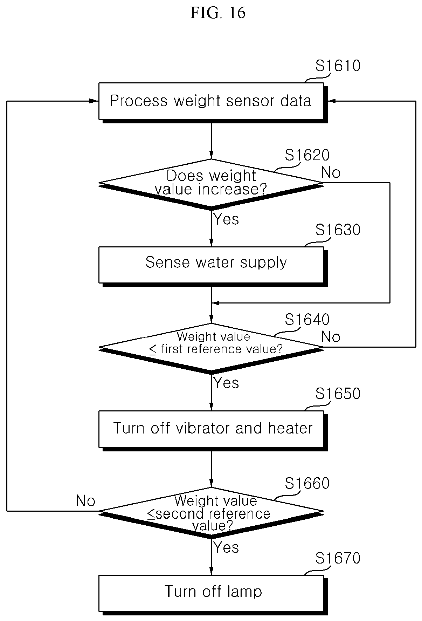

FIG. 16 is a flowchart illustrating a method for operating a humidifier according to an embodiment of the present disclosure, and discloses emergency control logic based on data sensed by a weight sensor.

Referring to FIG. 16, the control unit 1540 processes data sensed by the weight sensors 212a and 212b (S1610).

Weight values used in control logic may be values based on the data sensed by the weight sensors 212a and 212b. For example, the weight sensors 212a and 212b may be load cells, and the weight values may be load cell values output by the load cells. Alternatively, the weight values may be values acquired by processing (e.g., averaging) the load cell values and performing secondary processing for the processed load cell values.

The control unit 1540 may control the humidifier based on the weight values determined by processing the data sensed by the weight sensors 212a and 212b.

The weight sensors 212a and 212b may be placed in the middle tray 200. Further, a lamp 216 that emits light toward the first discharge passage 32 may be placed in the middle tray 200.

Meanwhile, the weight sensors 212a and 212b may be connected to a sensor circuit board 228. According to an embodiment, the sensor circuit board 228 may process the data sensed by the weight sensors 212a and 212b. The sensor circuit board 228 may transfer the determined weight values to the control unit 1540. The control unit 1540 may control the humidifier based on the received weight values.

That is, the data sensed by the weight sensors 212a and 212b may be processed by the control unit 1540 or the sensor circuit board 228.. Hereinafter, a case where the control unit 1540 processes the data sensed by the weight sensors 212a and 212b will be described as an example, but the sensor circuit board 228 may process the data in the same way.

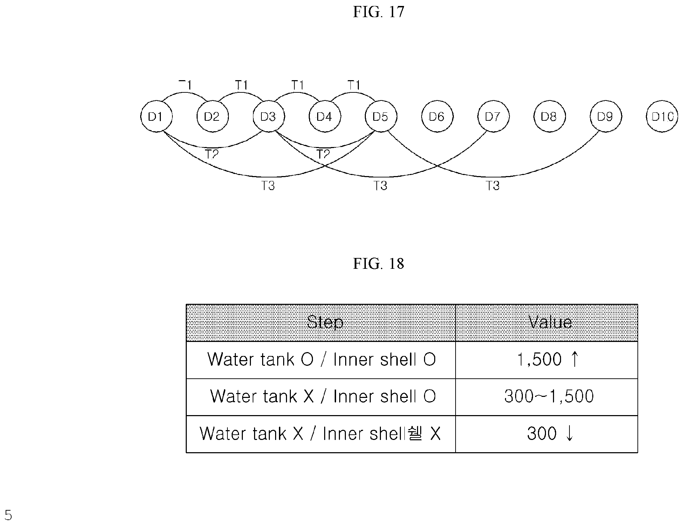

FIG. 17 is a diagram referred to in the description of weight sensor data processing according to an embodiment of the present disclosure.

Referring to FIG. 17, the weight sensors 212a and 212b placed below the water tank 100 and the inner shell 180 may acquire data at a first cycle T1.

Alternatively, the weight sensors 212a and 212b may acquire data in real time and sample the data at the first cycle T1.

According to an embodiment, the weight sensors 212a and 212b may communicate with the control unit 1540 in real time, and the control unit 1540 may acquire data by sampling the data received by the weight sensors 211a and 212a at the first cycle T1.

FIG. 17 illustrates 10 data D1 to D10 acquired during 10 * first cycle T1. For example, when the first cycle T1 is 0.2 seconds, 10 data D1, D2, D3, D4, D5, D6, D7, D8, D9, and D10 are acquired by the weight sensors 212a and 212b every 0.2 seconds for 20 seconds.

The control unit 1540 may process the data D1 to D10 sensed by the weight sensors 212a and 212b. The control unit 1540 may determine each of the data D1 to D10 as a weight value to be used in the control logic.

However, when the first cycle T1 is set to be short in order to acquire a large amount of data and precisely control the humidifier, an amount of data to be processed becomes too large, which may be inefficient in data processing and control.

Thus, in order to acquire a large amount data, and efficiently process the data while precisely controlling the humidifier, the control unit 1540 may process the data D1 to D10 to calculate secondary processed weight values.

The control unit 1540 may calculate an average value obtained by averaging the data D1 to D10 as the weight value. More preferably, the control unit 1540 may calculate the weight value at a second cycle T2. Here, the second cycle T2 which is an average value calculation cycle is set longer than the first cycle T1 which is a data acquisition cycle.

The control unit 1540 may calculate the weight value by averaging predetermined data every second cycle T2. Further, the control unit 1540 may calculate the weight value by averaging data during a third cycle T3 every second cycle T2. The third cycle T3 is set longer than the second cycle T2, so that more data may be used for the average calculation.

Thus, data variation may be precisely monitored by continuously calculating the weight value while improving data processing efficiency.

In the example of FIG. 17, the control unit 1540 may calculate the weight value by averaging D1, D2, D3, D4, and D5. After the second cycle T2, D3, D4, D5, D6, and D7 are averaged to calculate a next weight value. Additionally after the second cycle T2, D5, D6, D7, D8, and D9 are averaged to calculate a next weight value. By such a way, the weight value may be continuously averaging the data during the third cycle T3 every second cycle T2.

Meanwhile, the control unit 1540 may exclude zero among the data during the third cycle T3 from the average calculation. In addition, when the data includes continuous zeros of a reference number (e.g., 5) or more, the control unit 1540 may regard the weight value as zero. Thus, , even if there is any one '0', the weight is not recognized as '0' if the weight value does not become N continuous '0s' without affecting the average value. As a result, noise may be removed from the data and malfunction may be prevented.

Meanwhile, when the weight value increases (S1620), the control unit 1540 may determine that water is supplying to the water tank 100. In order to further increase accuracy, the control unit 1540 may determine that the water is supplying when the weight value increases continuously two or more times.

Meanwhile, when the weight value is equal to or smaller than a first reference value, the control unit 1540 turns off the vibrator 370 and the heater 340 (S1650).

The first reference value may be set based on a state in which the water tank 100 is removed. When the weight value is equal to or smaller than the first reference value, the control unit 1540 may determine a state in which the water tank 100 is not mounted.

For example, during a humidification operation, a user may separate the water tank 100 from the humidifier in order to add more water to the water tank 100 or simply clean and use the water tank 100. In this case, the vibrator 370 and the heater 340 are turned off to prevent an unnecessary humidification operation and a safety accident.

The control unit 1540 may turn off the vibrator 370 and the heater 340, and maintain the blower fan 62 in an operating state. By maintaining the operating state of the blower fan 62, the humidifier may operate in the air purification mode.

Meanwhile, the lamp 216 is also maintained in the operating state to visually indicate a current state.

When the control unit 1540 determines that the water tank 100 is mounted as the weight value exceeds the first reference value again, the control unit 1540 turns on the vibrator 370 and the heater 340 to quickly return to the humidification operation mode.

As a result, the user may conveniently supply water or clean the water tank 100, thereby improving convenience.

Meanwhile, when the weight value is equal to or smaller than a second reference value smaller than the first reference value (S1660), the control unit 1540 may not only turn off the vibrator 370 and the heater 340, but also turn off the lamp 216 (S1670).

The second reference value may be set based on a state in which the water tank 100 and the inner shell 180 are removed. When the weight value is equal to or smaller than the second reference value, the control unit 1540 may determine a state in which the water tank 100 and the inner shell 180 are not mounted.

The inner shell 180 may form the first discharge passage 32 with the water tank 100 at an inside. Further, the inner shell 180 may form the second discharge passage 34 with the outer shell 22 at an outside. At least a part of the inner shell 180 is made of a transparent material, so the light of the lamp 216 may pass therethrough.

FIG. 18 is a diagram referred to in the description of water tank sensing according to an embodiment of the present disclosure, and illustrates a step of determining whether a water tank is mounted depending on a weight value.

Referring to FIG. 18, when the weight value exceeds a first reference value (e.g., 1500), both the water tank 100 and the inner shell 180 are mounted.

When the weight value exceeds a second reference value (e.g., 300) and is equal to or smaller than the first reference value (e.g., 1500), the inner shell 180 is mounted, and only the water tank 100 is not mounted.

When the weight value is equal to or smaller than the second reference value (e.g., 300), neither the water tank 100 nor the inner shell 180 are mounted.

When the water bath 100 is removed as well as the inner shell 180, the lamp 216 may be exposed to the outside. When even the inner shell 180 is removed, the humidification operation is stopped and the lamp 216 is turned off to visually indicate the current state.

The control unit 1540 determines whether the water tank 100 and the inner shell 180 are mounted and the water level based on the data sensed by the weight sensors 212a and 212b, and controls the water tank 100 to operate appropriately according to a determined state, thereby improving convenience and reliability.

According to the present disclosure, the water tank 100 may be easily washed, directly mounted, and reused while a humidified product is used in the air purification mode or the like without turning off the humidifier product, thereby improving use convenience.

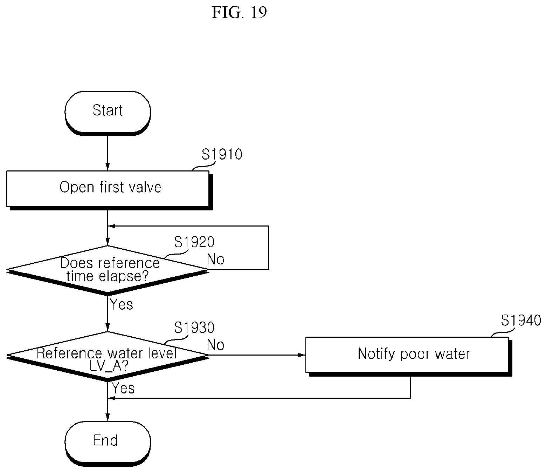

FIG. 19 is a flowchart illustrating a method for operating a humidifier according to an embodiment of the present disclosure.

During the humidification operation, the control unit 1540 may open the first valve 400 and supply the water in the water tank 100 to the first humidification reservoir 300 (S1910).

However, when the first water level sensor 338 does not sense a reference water level LV_A (S1930) even though the first valve 400 is opened (S1910) and a reference time has elapsed (S1920), the control unit 1540 performs poor water notification control (S1940).

During the poor water notification control (S1940), the output unit 1520 may continuously display a water replenishment screen. Further, during the poor water notification control (S1940), the output unit 1520 may output a water-deficient melody a predetermined number of times.

Meanwhile, during the poor water notification control (S1940), when the heater 340 and the vibrator 370 are in operation, the control unit 1540 may turn off or limitedly operate the heater 340 and the vibrator 370.

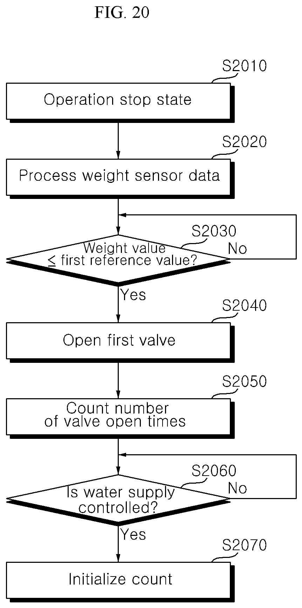

FIG. 20 is a flowchart illustrating a method for operating a humidifier according to an embodiment of the present disclosure, and discloses keeping mode logic.

Referring to FIG. 20, in an operation stop state (S2010), the control unit 1540 processes data sensed by the weight sensors 212a and 212b (S2010).

As described with reference to FIGS. 16 and 17, the control unit 1540 may calculate weight values by processing the data sensed by the weight sensors 212a and 212b.

Further, according to an embodiment, the sensor circuit board 228 may process the data sensed by the weight sensors 212a and 212b. The sensor circuit board 228 may transfer the determined weight values to the control unit 1540.

The control unit 1540 may calculate the weight value by averaging data during a third cycle T3 every second cycle T2. The data may be acquired at a first cycle T1.

The control unit 1540 may exclude zero among the data during the third cycle T3 from the average calculation. In addition, when the data includes continuous zeros of a reference number (e.g., 5) or more, the control unit 1540 may regard the weight value as zero.

In an operation stop state, when the weight value is equal to or smaller than a first reference value (S2030), the control unit 1540 open-controls the first valve 400 (S2040).

When the first valve 400 is closed while water is admitted, water may remain around the first valve 400 even after the humidification operation is finished. Before water that passes through the water softener 140 is supplied into the first humidification reservoir 300, residual water may be generated in the vicinity of the first valve 400 while the first valve 400 is closed.

The first reference value may be set based on a state in which the water tank 100 is removed. When the weight value is equal to or smaller than the first reference value, the control unit 1540 may determine a state in which the water tank 100 is not mounted.

In this case, the control unit 1540 open-controls the first valve 400 (S2040) to control the residual water around the first valve 400 to flow to the first humidification reservoir 300.

Further, in a state in which the first valve 400 is opened, the control unit 1540 rotates the blower fan 62 to control the inside to be dried faster.

Further, when keeping the humidifier for a long time, the user opens the drain pip 394 with the drain pipe valve 396 to discharge the water in the first humidification reservoir 300 to the outside.

The control unit 1540 may close the first valve after opening the first valve 400 for a preset opening time. The first valve 400 may be closed after the opening time has elapsed. The blower fan 62 may rotate for the opening time, and then stop when the opening time has elapsed.

Meanwhile, the opening of the first valve 400 for keeping may be limited to one time.

To this end, the control unit 1540 may count the number of opening times of the first valve 400 (S2040).

Meanwhile, when the humidification operation is performed (S2060), the control unit 1540 may initialize the number of opening times (S2070).

When the first valve 400 is opened and then closed as the humidification operation is performed (S2060), the control unit 1540 may initialize the number of opening times (S2070).

The control unit 1540 operates the first valve 400 based on the data of the weight sensors 212a and 212b in the stop state to enhance internal hygiene, and keep the humidifier in a clean state when the humidifier is not used.

## Claims

1. A humidifier comprising:
a water tank (100) forming a space in which water is held;
a first humidification reservoir (300) connected to the water tank (100) through a supply tube, in which a heater is placed;
a first valve (400) opening and closing the supply tube;
a second humidification reservoir (350) connected to the first humidification reservoir (300) through a first connection pipe, in which a vibrator is placed; and
a middle tray (200) placed below the water tank,
wherein a weight sensor (212a, 212b) is placed in the middle tray (200), and
when a weight value based on data sensed by the weight sensor (212a, 212b) is equal to or smaller than a first reference value in an operation stop state, the first valve (400) is opened.

2. The humidifier of claim 1, wherein the number of opening times of the first valve (400) is counted, and
when water supplying control of the first humidification reservoir (300) is performed, the counter is initialized.

3. The humidifier of claim 1, wherein the number of opening times of the first valve (400) is counted, and
when a humidification operation is performed, the count is initialized.

4. The humidifier of claim 1, 2, or 3, wherein the first valve (400) is closed after a preset opening time has elapsed.

5. The humidifier of claim 4, further comprising:
a blower fan (62) placed below the first humidification reservoir (300) and the second humidification reservoir (350),
wherein the blower fan (62) rotates for the opening time.

6. The humidifier of any one of claims 1 to 5, further comprising a control unit (1540) controlling a humidifier based on the weight value.

7. The humidifier of claim 6, wherein the weight sensor (212a, 212b) acquires data at a first cycle, and
the control unit (1540) calculates a weight value by averaging the data of the weight sensor (212a, 212b) at a second cycle set longer than the first cycle.

8. The humidifier of claim 7, wherein the control unit (1540) averages data during a third cycle set longer than the second cycle every second cycle.

9. The humidifier of claim 8, wherein the control unit (1540) excludes zero among the data during the third cycle from the average calculation.

10. The humidifier of claim 7, 8, or 9, wherein the control unit (1540) processes zero as the weight value when the data includes continuous zeros of a reference number or more.

11. The humidifier of any one of claims 6 to 10, further comprising:
wherein a plurality of weight sensors (212a, 212b) are provided,
a sensor circuit board (228) connected to the plurality of weight sensors (212a, 212b).

12. The humidifier of claim 11, wherein a supply tube hole through which the supply tube passes is formed in the middle tray (200), and
wherein the weight sensor (212a, 212b) includes
a first front weight sensor (212a1) placed on one side of the supply tube, and a first rear weight sensor (212a2) placed in a rear of the first front weight sensor (212a1), and
a second front weight sensor (212b1) placed on the other side of the supply tube hole, and a second rear weight sensor (212b2) placed in a rear of the second front weight sensor (212b1).

13. The humidifier of claim 11, or 12, wherein the sensor circuit board (228) processes the data acquired through the plurality of weight sensors (212a, 212b) and transmits the processed data to the control unit (1540).
